(19) Europäisches Patentamt
European Patent Office
Office européen des brevets

(11) **EP 4 661 280 A1**

(12) **EUROPÄISCHE PATENTANMELDUNG**

(43) Veröffentlichungstag:
**10.12.2025 Patentblatt 2025/50**

(21) Anmeldenummer: **24180425.1**

(22) Anmeldetag: **06.06.2024**

(51) Internationale Patentklassifikation (IPC):
***H02P 3/18*** (2006.01)   ***B25F 5/00*** (2006.01)
***H02P 21/36*** (2016.01)

(52) Gemeinsame Patentklassifikation (CPC):
**H02P 3/18; B25F 5/00; H02P 21/36**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Hilti Aktiengesellschaft
9494 Schaan (LI)**

(72) Erfinder: **Scherbaum, Markus
86853 Gennach (DE)**

(74) Vertreter: **Hilti Aktiengesellschaft
Corporate Intellectual Property
Feldkircherstrasse 100
Postfach 333
9494 Schaan (LI)**

(54) **VERFAHREN ZUM BREMSEN EINER WERKZEUGMASCHINE UND WERKZEUGMASCHINE**

(57)    Die vorliegende Erfindung betrifft ein Verfahren zum Bremsen einer Werkzeugmaschine (10), wobei die Werkzeugmaschine (10) eine akkubetriebene oder eine netzbetriebene Werkzeugmaschine ist und einen Brems-Chopper aufweist, und elektrische Energie, die beim Bremsen der Werkzeugmaschine (10) frei wird, zumindest teilweise in eine Energieversorgungsvorrichtung (14) oder einen Zwischenkreis der Werkzeugmaschine (10) zurückgespeist wird.

**Fig. 12**

EP 4 661 280 A1

## Beschreibung

Die vorliegende Erfindung betrifft ein Verfahren zum Bremsen einer Werkzeugmaschine, wobei die Werkzeugmaschine eine akkubetriebene oder eine netzbetriebene Werkzeugmaschine ist und elektrische Energie, die beim Bremsen der Werkzeugmaschine frei wird, in eine Energieversorgungsvorrichtung bzw. einen Zwischenkreis der Werkzeugmaschine zurückgespeist wird. Die Erfindung macht von dem Grundgedanken Gebrauch, dass die Bremsleistung reduziert wird, wenn die Energieversorgungsvorrichtung der Werkzeugmaschine ihre Grenzen für die Aufnahme elektrischer Energie erreicht hat. Diese Reduzierung der Bremsleistung kann durch eine Verkürzung eines Stromraumzeigers mit Hilfe von Korrekturfaktoren oder durch seine Drehung in einer Raumzeigerdarstellung bewirkt werden. In einem zweiten Aspekt betrifft die Erfindung eine Werkzeugmaschine zur Durchführung des Bremsverfahrens.

## Hintergrund der Erfindung:

Im Bereich der Werkzeugmaschinen ist es bekannt, die Werkzeuge der Werkzeugmaschinen abzubremsen, um eine Arbeit zu beenden oder aus Sicherheitsgründen. Im Stand der Technik sind insbesondere die folgenden Bremsverfahren bekannt: Kurzschlussbremsen, Verwendung eines Brems-Choppers als Bremswiderstand und Rekuperation.
Beim Kurzschlussbremsen wird der Motor der Werkzeugmaschine kurzgeschlossen. Dies kann beispielsweise dadurch erreicht werden, dass alle Lowside-Halbleiter des Motorinverters gleichzeitig eingeschaltet werden. Es kann sich ein anfänglich höherer Anfangskurzschluss-Strom ausbilden, der anschließend in einen Dauerkurzschluss-Strom übergeht. Der Kurschluss-Strom erzeugt im Motor der Werkzeugmaschine ein Bremsmoment, mit dem die Werkzeugmaschine bzw. ihr Werkzeug abgebremst werden kann. Nachteilig am Kurzschlussbremsen ist es, dass der Nutzer kaum Einfluss auf das Bremsmoment bzw. die Bremszeit hat. Die Höhe des Kurzschluss-Stroms wird lediglich durch Motorparameter bestimmt. Darüber hinaus muss die Elektronik der Werkzeugmaschine den zu Beginn des Kurzschlussbremsens vergleichsweise hohen Anfangs-Kurzschluss-Strom führen können. Wenn die Werkzeugmaschine nicht dafür ausgelegt ist, solche Kurzschluss-Ströme auszuhalten, kann es zu Beschädigungen an der Werkzeugmaschine bzw. ihrer Elektronik kommen.
Bei der Verwendung eines Brems-Choppers als Bremswiderstand kann der Motor der Werkzeugmaschine geregelt gebremst werden, so dass er zum Generator wird. Die abgegebene Energie kann in einen Zwischenkreis der Elektronik der Werkzeugmaschine zurückgespeist werden. Die Werkzeugmaschine kann einen Brems-Chopper als Bremswiderstand aufweisen, wobei der Bremsshopper dazu eingerichtet ist, einen Widerstand an den Zwischenkreis anzuschließen, um auf diese Weise die Energie im Bremswiderstand in Wärme umzuwandeln. Obwohl die Verwendung eines Brems-Choppers mehr Freiheitsgrade bei der Erreichung bestimmter gewünschter Bremsmomente bzw. Bremszeiten gewährt, besteht ein Nachteil bei der Verwendung eines Brems-Choppers darin, dass zumindest ein zusätzliches Hardware-Bauteil in der Werkzeugmaschine verbaut werden muss. Dies erhöht das Gewicht der Werkzeugmaschine und ihr Volumen. Unter einem größeren Volumen kann beispielsweise die Ergonomie bzw. die Handhabbarkeit der Werkzeugmaschine leiden. Häufig zieht der Einbau eines Brems-Choppers auch das Erfordernis weiterer zusätzlicher Elektronik-Bauteile, wie MOSFETs, Gatetreiber oder Anschlusslitzen, mit sich, was insbesondere auch die Herstellung bzw. den Zusammenbau der Werkzeugmaschine erschweren kann. Insbesondere dann, wenn der Brems-Chopper für hohe Pulsleistungen ausgelegt sein soll, können die Kosten für die Werkzeugmaschine, sowie der Bauraumbedarf im Inneren der Werkzeugmaschine erheblich steigen.
Das Rekuperieren ist nur dann möglich, wenn rückspeisefähige Energieversorgungsvorrichtungen in der Werkzeugmaschine verwendet werden. Der Motor der Werkzeugmaschine kann beim Rekuperieren geregelt gebremst und dadurch zum Generator werden. Die abgegebene Energie kann in den Zwischenkreis zurückgespeist und von dort in die Energieversorgungsvorrichtungen transferiert werden. Die Güte und das Rekuperationsvermögen der Werkzeugmaschine hängen wesentlich von der in der Werkzeugmaschine verbauten Energieversorgungsvorrichtung ab. Bei Bremsvorgängen, bei denen beispielsweise der Bremsstrom konstant sein soll oder eine Bremsrampe vorgegeben wird, können Betriebszustände auftreten, die die Energieversorgungsvorrichtung so belasten, dass Grenzwerte, die beispielsweise elektrische Eigenschaften der Energieversorgungsvorrichtung, wie Spannung oder Stromtragefähigkeit, betreffen, überschritten werden können. Dadurch können Schäden an der Energieversorgungsvorrichtung auftreten. Um das Überschreiten dieser Grenzwerte zu vermeiden, ist bisher im Stand der Technik bekannt, den Bremsvorgang möglichst langsam durchzuführen. Dies ist aber vor allem dann keine gute Idee, wenn ein schnelles Abbremsen der Werkzeugmaschine gewünscht ist, beispielsweise um den Nutzer der Werkzeugmaschine schnell und sicher vor Verletzungen zu bewahren.
Die Aufgabe, die der vorliegenden Erfindung zugrunde liegt, besteht darin, die vorstehend beschriebenen Mängel und Nachteile des Standes der Technik zu überwinden und Verfahren zum Abbremsen einer Werkzeugmaschine, sowie eine Werkzeugmaschine bereitzustellen, so dass einerseits ein möglich wirksamer Schutz eines Nutzers der Werkzeugmaschine ermöglicht werden kann, andererseits eine kompakte, handliche Werkzeugmaschine bereitgestellt werden kann. Darüber hinaus soll die freiwerdende Energie möglichst effektiv in die Energieversorgungsvorrichtung zurückgespeist werden, um eine möglichst ressourcenschonende Werkzeugmaschine bereitstellen zu können, die eine gute Akku-Reichweite aufweist.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren zum Bremsen einer Werkzeugmaschine vorgesehen, wobei die Werkzeugmaschine eine akkubetriebene oder eine netzbetriebene Werkzeugmaschine ist und einen Brems-Chopper aufweist, und elektrische Energie, die beim Bremsen der Werkzeugmaschine frei wird, zumindest teilweise in eine Energieversorgungsvorrichtung oder einen Zwischenkreis der Werkzeugmaschine zurückgespeist wird. Das Bremsverfahren durch folgende Verfahrensschritte gekennzeichnet:

a) Regeneratives Bremsen eines motorgetriebenen Antriebs der Werkzeugmaschine,

b) Rückspeisen der elektrischen Energie, die beim Bremsen der Werkzeugmaschine frei wird, in die Energieversorgungsvorrichtung oder den Zwischenkreis der Werkzeugmaschine,

c) Bestimmen, ob die elektrische Energie, die beim Bremsen der Werkzeugmaschine (10) frei wird, mindestens einen Grenzwert der Energieversorgungsvorrichtung oder der Spannung des Zwischenkreises überschreitet;

d) Aufnehmen eines Teils der elektrischen Energie durch den Brems-Chopper, wenn die beim Bremsen freiwerdende elektrische Energie den mindestens einen Grenzwert der Energieversorgungsvorrichtung oder der Spannung des Zwischenkreises überschreitet.

Mit dem Verfahren kann einerseits eine möglichst kurze Bremszeit ermöglicht werden, andererseits eine kompakte, handliche Werkzeugmaschine bereitgestellt werden. Durch die besonders kurze Bremszeit kann der Nutzer der Werkzeugmaschine besonders wirksam vor Verletzungen geschützt werden. Das vorgeschlagene Verfahren ermöglicht vorteilhafterweise eine Rekuperation, d.h. eine Zurückspeisung von elektrischer Energie in eine Energieversorgungsvorrichtung in einer Werkzeugmaschine, mit besonders großer Effizienz. Dabei ist ein Brems-Chopper vorgesehen, welcher auf besonders einfache Weise dazu verwendet werden kann, einen Überschuss an elektrischer Energie, die beim Bremsen der Werkzeugmaschine erzeugt wird, in Wärme umzuwandeln. Der Brems-Chopper wird insbesondere nur dann aktiviert, wenn die durch das Bremsen erzeugte elektrische Energie einen Grenzwert der Energieversorgungsvorrichtung oder der Spannung des Zwischenkreises überschreitet. Der Grenzwert wird derart ermittelt oder vorbestimmt, dass dieser einer elektrischen Leistung entspricht, ab welcher die Energieversorgungsvorrichtung oder der Zwischenkreis beschädigt bzw. die Gesundheit des Benutzers gefährdet werden könnte. Das erfindungsgemäße Verfahren dient insbesondere dazu, auf einfache Weise den durch den Brems-Chopper aufzunehmenden Teil der elektrischen Energie zu bestimmen. Es soll dabei auf einen separaten Regler für den Brems-Chopper verzichtet werden.

Mit dem Verfahren ist es vorteilhafterweise möglich, die freiwerdende Bremsenergie besonders effizient in die Energieversorgungsvorrichtung zurückzuspeisen und lediglich den Überschuss an elektrischer Energie über den Brems-Chopper abzubauen. Es ist im Sinne der Erfindung bevorzugt, dass die Werkzeugmaschine zur Versorgung mit elektrischer Energie mit mindestens einer Energieversorgungsvorrichtung bzw. einem Zwischenkreis verbindbar ist. Beispielsweise kann die Werkzeugmaschine Aufnahmebereiche bzw. Möglichkeiten zur Ankoppelung von einer, zwei oder mehr Energieversorgungsvorrichtungen, wie Batterien oder Akkumulatoren («Akkus») aufweisen. Es ist im Sinne der Erfindung bevorzugt, dass die Begriffe Akkumulator («Akku»), Batterie und Energieversorgungsvorrichtung synonym verwendet werden. Die Elektronik der Werkzeugmaschine und ihr Motor werden dabei vorzugsweise in einem optimalen Arbeitspunkt mit besonders geringer Verlustleistung betrieben. Um dies zu erreichen, kann die Werkzeugmaschine beispielsweise entlang einer verlustleistungsoptimierten Kennlinie betrieben werden. Die Formulierung, dass der Betrieb der Werkzeugmaschine entlang einer verlustleistungsoptimierten Kennlinie erfolgt, bedeutet im Sinne der Erfindung bevorzugt, dass die Verluste bei Betrieb der Werkzeugmaschine mit der Erfindung minimiert werden können. Dabei kann es sich beispielsweise um Eisen- und/oder Kupferverluste handeln. Die Formulierung, dass der Betrieb der Werkzeugmaschine entlang einer verlustleistungsoptimierten Kennlinie erfolgt, kann darüber hinaus bedeuten, dass die Werkzeugmaschine in Bezug auf die Stromausbeute und/oder den Wirkungsgrad optimiert betrieben wird.

Nach einer Ausführungsform der vorliegenden Erfindung wird ein Korrekturfaktor $k\_red$ auf der Basis einer Differenz zwischen der während des Bremsens freiwerdenden elektrischen Energie und dem Grenzwert der Energieversorgungsvorrichtung oder der Spannung des Zwischenkreises bestimmt, wobei ein Tastgrad des Brems-Choppers auf Grundlage des Korrekturfaktors $k\_red$ bestimmt wird. Mit anderen Worten, die Leistungsaufnahme des Brems-Choppers, d.h. die durch den Brems-Chopper abgeführte elektrische Energie, ist proportional, insbesondere direkt proportional zu einer aus Reglerausgangsgrößen gebildeten Stellgröße. Diese Regler werden zur Einhaltung der Grenzwerte eingesetzt. Der Brems-Chopper dient dazu den Überschuss an freiwerdender elektrischer Energie aufzunehmen, der nicht durch die Energieversorgungsvorrichtung oder den Zwischenkreis aufgenommen werden kann. Der Korrekturfaktor kann sich beispielsweise zwischen 0 und 1 (0% und 100%) bewegen. Der Korrekturfaktor k_red kann umgekehrt proportional zur Differenz sein, welche zwischen der während des Bremsens freiwerdenden elektrischen Energie und dem Grenzwert der Energieversorgungsvorrichtung besteht. Diese Differenz kann auch als Energieüberschuss bezeichnet werden, welcher nicht mehr oder nicht risikolos in die Energieversorgungsvorrichtung zurückgeführt werden kann. Der Korrekturfaktor k_red kann so lange 1 sein, solange kein Energieüberschuss bzw. kein Überschreiten des Grenzwerts vorliegt. Der entsprechende Regler kann auf eine Stellgröße (k_red) von 1 beschränkt sein. Ab einer Überschreitung des Grenzwerts ergibt sich die oben genannte Differenz bzw. der Energieüberschuss, welcher einerseits durch den Chopper und gegebenenfalls andrerseits durch das eine Reduzierung des Motorstroms abgebaut werden kann.

Nach einer weiteren Ausführungsform setzt sich der Korrekturfaktor kRed aus einem ersten Korrekturparameter kU_red, und einem zweiten Korrekturparameter kI_red, insbesondere aus einem Produkt des ersten Korrekturparameters kU_red, mit dem zweiten Korrekturparameter kI_ red, zusammen, wobei der erste Korrekturparameter kU_red vorzugsweise durch einen Spannungsregler der Energieversorgungsvorrichtung ermittelt wird, und wobei der zweite Korrekturparameter kI_red vorzugsweise durch einen Stromregler der Energieversorgungsvorrichtung ermittelt wird. Der Spannungsregler kann beispielsweise dazu ausgebildet sein, eine Überschreitung eines maximalen Spannungswerts für die Energieversorgungsvorrichtung bzw. den Zwischenkreis zu ermitteln. Bei Überschreitung des maximalen Spannungswerts kann der Spannungsregler einen ersten Korrekturparameter kU_red ausgeben, welcher umgekehrt proportional zur Differenz zwischen beim Bremsen erzeugten Motorspannung und dem maximalen Spannungswert ist. Mit anderen Worten, je stärker der Spannungsüberschuss, desto niedriger ist der erste Korrekturparameter kU_red. Der Stromregler kann beispielsweise dazu ausgebildet sein, eine Überschreitung einer maximalen Stromstärke für die Energieversorgungsvorrichtung bzw. den Zwischenkreis zu ermitteln. Bei Überschreitung der maximalen Stromstärke kann der Stromregler einen zweiten Korrekturparameter kI_red ausgeben, welcher umgekehrt proportional zur Differenz zwischen dem beim Bremsen erzeugten Motorstrom und der maximalen Stromstärke ist. Mit anderen Worten, je höher der Stromfluss, desto niedriger ist der zweite Korrekturfaktor kI_red.

Nach einer weiteren Ausführungsform ist der Tastgrad D des Brems-Choppers auf Grundlage eines Verhältnisses des Korrekturfaktors k_red gegenüber einer Mapping-Grenze k_Mapping bestimmt wird, wobei die Mapping-Grenze k_Mapping einem Grenzwert des Korrekturfaktors k_red entspricht, ab welchem eine Reduzierung der Bremsleistung der Werkzeugmaschine vorgenommen wird. Gemäß dieser Ausführungsform wird vorgeschlagen eine Mapping-Grenze einzuführen, ab welcher überschüssige Energie, die beim Bremsen des Motors erzeugt wird, nicht mehr ausschließlich über den Brems-Chopper, sondern zusätzlich durch eine Reduzierung des Motorstroms erzielt wird. Die Mapping-Grenze entspricht insbesondere eines vorab festlegbaren oder dynamisch ermittelbaren Werts des Korrekturfaktors k_Red. Mit anderen Worten, wird durch die Mapping-Grenze festgelegt, bis zu welchem Korrekturfaktor (d.h. Reduktionfaktor) lediglich der Brems-Chopper verwendet wird, um den Energieüberschuss abzubauen. Gemäß dieser Ausführungsvariante ist es nicht notwendig, einen eignen Regler für den Bremschopper vorzusehen. Vielmehr kann auch der Tastgrad D des Bremschoppers über den Spannungsregler und den Stromregler mit gesteuert werden. Dies ist insbesondere deshalb möglich, da der Spannungsregler und der Stromregler den Korrekturfaktor k_red bestimmen.

Nach einer weiteren Ausführungsform weist der Tastgrad D des Brems-Choppers den Wert 1 auf, wenn der Korrekturfaktor k_red kleiner oder gleich der Mapping-Grenze k_Mapping ist. Mit anderen Worten ist der Brems-Chopper unter Volllast, d.h. der Brems-Chopper arbeitet mit dem maximal möglichen Tastgrad, so lange der Korrekturfaktor unterhalb der Mapping-Grenze liegt. Eine Abschaltung des Bremschoppers erfolgt andererseits nur dann, wenn der Korrekturfaktor 1 beträgt, also keine überschüssige Energie während des Bremsens erzeugt wird. Bei Verringerung des Korrekturfaktors zwischen 1 und der Mapping-Grenze, erhöht sich der Tastgrad indirekt proportional, d.h. der Tastgrad steigt proportional an, bis der maximale Tastgrad des Brems-Choppers erreicht ist, insbesondere wenn der Korrekturfaktor die Mapping-Grenze erreicht.

Nach einer weiteren Ausführungsform wird der Tastgrad D des Brems-Choppers nach folgender Formel ermittelt, solange der Korrekturfaktor oberhalb der Mapping-Grenze liegt:

$$D = kred / (kMapping - 1) - 1 / (kMapping - 1)$$

Gemäß dieser Funktion wird der Tastgrad D stetig erhöht, während sich der Korrekturfaktor zwischen 1 und der Mapping-Grenze verringert.

Die Mapping-Grenze kann einen Wert zwischen 0 und 1 aufweisen. Insbesondere kann die Mapping-Grenze jeden Wert des Korrekturfaktors annehmen.

Die Mapping-Grenze kann ein konstanter und/oder vorbestimmter Wert sein. Beispielsweise kann die Mapping-Grenze auf einen Korrekturfaktor von 0,6 festgelegt sein. In diesem Fall, wird eine durch den Korrekturfaktor bestimmte Reduzierung der durch das Bremsen erzeugten Energie solange durch den Brems-Chopper erzielt, bis mehr als 40% (1 - 0,6) der während des Bremsens erzeugten Energie überschüssig sind. Solange der Korrekturfaktor größer als die Mapping-Grenze ist (hier z.B. k_red > 0,6), kann der komplette Energieüberschuss im Brems-Chopper umgesetzt werden.

In einer weiteren Ausführungsform wird die Mapping-Grenze dynamisch ermittelt wird, insbesondere auf Grundlage einer mechanischen Bremsleistung der Werkzeugmaschine sowie einer Chopper-Bremsleistung. Wie dies später näher erläutert werden wird, ist je nach (dynamisch) bestimmten Wert für die Mapping-Grenze eine Steigung der Rekuperationsleistung in Abhängigkeit des Korrekturfaktors vor und nach der Mapping-Grenze unterschiedlich. Es ist vorteilhaft, wenn die Mapping-Grenze so gewählt wird, dass die Steigungen näherungsweise gleich sind, d.h. kein Knick in der Rekuperationsleistungs-Kurve entsteht. Ein Knick mit unterschiedlichen Steigungen würde in unterschiedlichen Kreisverstärkungen des Regelkreises resultieren, der dadurch in einem Bereich instabil werden könnte. Vereinfacht ausgedrückt, kann das Verfahren einen Schritt aufweisen, bei dem die Mapping-Grenze so gewählt wird, dass diese einem Verhältnis der mechanischen Bremsleistung der Werkzeugmaschine zur Gesamtbremsleistung (mechanische Bremsleistung der Werkzeugmaschine + Chopper Bremsleistung) entspricht. Sollte die mechanische Bremsleistung der Werkzeugmaschine also 60 Prozent der Gesamtbremsleistung entsprechen, so wird die Mapping-Grenze vorzugsweise als 0,6 definiert.

Die Werkzeugmaschine kann entlang einer MTPA-Kennlinie in einer Raumzeigerdarstellung betrieben werden, wobei die Abkürzung MTPA für "maximum torque per Ampere" steht, d.h. für ein maximales Drehmoment pro Ampere. Dadurch kann die Werkzeugmaschine vorteilhafterweise mit einer optimalen Stromausbeute betrieben werden. Es hat sich gezeigt, dass der Betrieb der Werkzeugmaschine auf diese Weise besonders verlustarm bzw. verlustleistungsarm erfolgen kann. Vorzugsweise wird im Kontext der Erfindung ein maximaler Motorstatorsollstrom I_S, max vorgegeben, der bevorzugt auch als maximaler Motorstrom I_S, max bezeichnet wird.

Dieser maximale Motorstrom I_S, max kann somit einen ersten Stromwert im Sinne der Erfindung darstellen. Bei einer zu hohen Rückspeisung bzw. Rückspeiseleistung kann es allerdings dazu kommen, dass Grenzwerte, die einen sicheren Betrieb der Energieversorgungsvorrichtung sicherstellen sollen, überschritten werden. Diese Grenzwerte können die Spannung und/oder den Strom der Energieversorgungsvorrichtung betreffen. Sie werden im Sinne der Erfindung als Grenzwerte der Energieversorgungsvorrichtung bzw. als «Akku-Grenzwerte» bezeichnet. Es ist im Sinne der Erfindung bevorzugt, dass der Akku-Grenzwert für die Spannung als U_Akku, max und der Akku-Grenzwert für den Strom als I_Akku, max bezeichnet wird.

Alternativ oder ergänzend kann es sich bei dem ersten Stromwert um den Motorsollstrom I_S, soll handeln. Es ist im Sinne der Erfindung bevorzugt, dass das Überschreiten der Akku-Grenzwerte zunächst durch eine aktive Regelung des Brems-Choppers verhindert wird. Dazu wird, vorzugsweise nachdem eine Überschreitung von mindestens einem der Akku-Grenzwerte erkannt wurde, der Bremschopper aktiviert.

In einer Ausgestaltung der Erfindung kann die Werkzeugmaschine beispielsweise mit einem Motorsollstrom I_S, soll betrieben werden. Es kann darüber hinaus ein maximaler Motorstrom I_S, max vorgegeben werden, wobei die Bremsleistung der Werkzeugmaschinereduziert wird, wenn ein Grenzwert der Energieversorgungsvorrichtung bzw. des Zwischenkreises auch nach vollem Betrieb des Bremschoppers überschritten wird. Die Bremsleistung der Werkzeugmaschine kann sodann dadurch reduziert werden, dass ein Stromraumzeiger I_S, max in der Raumzeigerdarstellung durch Anwendung eines geänderten Bremswinkels β_brems so gedreht wird, dass eine Länge des Stromraumzeigers I_S, max im Wesentlichen unverändert bleibt. Durch die Drehung des Stromraumzeigers I_S, max können die geänderten Sollstromwerte, vorzugsweise für die d- und die q-Achse der Raumzeigerdarstellung, ermittelt und die Bremsleistung der Werkzeugmaschine auf diese Weise verringert werden. Es ist in dieser Ausgestaltung der Erfindung bevorzugt, dass mit Hilfe des maximalen Statorstroms I_S, max und dem Bremswinkel β_brems die Sollstromwerte, vorzugsweise für die d- und q-Achse des Raumzeigerdarstellung, ermittelt werden, wobei die Sollstromwerte, vorzugsweise für die d- und q-Achse, als Ausgangs- oder Stellgröße dem weiterem Abbremsverfahren zugrunde gelegt werden sollen.

Es ist bevorzugt, dass auch im Falle der Drehung des Stromraumzeiger I_S, max ein Korrekturfaktor k_Dreh ermittelt werden kann. Vorzugsweise kann der Korrekturfaktor k_Dreh auf eine Winkellage des Stromraumzeigers I_S,max angewendet werden, so dass eine Drehung des Stromraumzeigers I_S,max mit einem geänderten Bremswinkel ß_brems erhalten wird.

In einer weiteren Ausgestaltung der Erfindung kann die Bremsleistung der Werkzeugmaschine dadurch reduziert werden, dass mindestens ein Strom-Korrekturfaktor ermittelt und auf den maximalen Motorstrom I_S, max angewendet wird. Dadurch kann ein reduzierter Sollwert I_S, red für den Motorstrom erhalten werden, basierend auf dem dann wieder die geänderten Sollstromwerte, vorzugsweise für die d- und die q-Achse der Raumzeigerdarstellung, ermittelt und die Bremsleistung der Werkzeugmaschine auf diese Weise verringert werden. Der reduzierte Sollwert I_S, red für den Motorstrom kann an einen Motorstromregler weitergegeben werden, so dass der Motorstrom basierend auf dem reduzierten Sollwert I_S, red geregelt bzw. eingestellt werden kann. Es ist im Sinne der Erfindung bevorzugt, dass in dieser Ausgestaltung die Bremsleistung der Werkzeugmaschine dadurch reduziert wird, dass der Stromraumzeiger verkürzt wird. Mit anderen Worten für die Anwendung des Strom-Korrekturfaktors k auf den maximalen Motorstrom I_S, max zu einer Verkürzung des Stromraumzeiger, wodurch vorteilhafterweise die Bremsleistung der Werkzeugmaschine dadurch reduziert werden kann. Der Strom-Korrekturfaktor kann auf Grundlage eines Verhältnisses des Korrekturfaktors gegenüber der Mapping-Grenze bestimmt werden. Insbesondere kann der Strom-Korrekturfaktornach folgender Formel ermittelt werden, solange der Korrekturfaktor unterhalb der Mapping-Grenze liegt (oberhalb der Mapping-Grenze ist ausschließlich der Brems-Chopper aktiv und es wird keine Reduzierung des Motorstroms vorgenommen):

$$k_{S,red} = k_{red} / k_{Mapping}$$

In einer weiteren Ausgestaltung der Erfindung kann die Werkzeugmaschine unter Vorgabe des maximalen Motorstroms I_S, max betrieben werden. Die die Bremsleistung der Werkzeugmaschine kann entweder dadurch verringert werden, dass mindestens einem Strom-Korrekturfaktors k ermittelt und auf den maximalen Motorstrom I_S, max angewendet wird, so dass ein reduzierter Sollwert I_S, red für den Motorstrom erhalten wird oder dadurch, dass der Stromraumzeiger I_S, max in der Raumzeigerdarstellung gedreht wird, so dass eine Länge des Stromraumzeigers I_S, max im Wesentlichen unverändert bleibt. Die Drehung des Stromraumzeigers I_S, max kann vorzugsweise dadurch erfolgen, dass ein geänderter Bremswinkel β_brems auf den Stromraumzeiger I_S, max angewendet wird.

Durch die Drehung des Stromraumzeigers I_S, max kann ein Arbeitspunkt des Motors der Werkzeugmaschine auf ein geringeres Drehmoment und damit auch eine geringere Bremsleistung eingestellt werden, ohne die Statorstromamplitude zu verkleinern. Dieser hohe Statorstrom kann dann weiter hohe Verluste innerhalb eines Inverters, der Elektronik und/oder des Motors verursachen, so dass die Bremsenergie aufgenommen und in Wärme umgewandelt werden kann. Vorzugsweise kann selbst bei begrenzter Leistungsaufnahme beim Zurückspeisen von elektrischer Energie in die Energieversorgungsvorrichtung eine überraschend große Verlustleistung in der Elektronik, dem Inverter und/oder dem Motor der Werkzeugmaschine umgesetzt werden. Dadurch kann vorteilhafterweise eine zusätzliche Leistungssenke geschaffen und der Bremsvorgang noch schneller gemacht werden. Insbesondere kann durch die Anwendung des geänderten Bremswinkels β_brems und der dadurch bewirkten Drehung des Stromraumzeigers I_S, max in der Raumzeigerdarstellung ein mit großen Verlusten behafteter generatorischer Bremsbetrieb für eine Werkzeugmaschine zum Abbremsen ihres Werkzeugs bereitgestellt werden, wobei das vorgeschlagene Verfahren zunächst ohne einen Brems-Chopper auskommt. Vorzugsweise kann der Bremswinkels β_brems im Sinne der Erfindung bevorzugt auch als "Statorstromraumzeigerwinkel β_brems" bezeichnet werden.

Es ist im Sinne der Erfindung bevorzugt, dass bei der Drehung des Stromraumzeigers I_S, max zur Reduzierung der Bremsleistung der Akku-Spannungsregler und der Akku-Stromregler dazu verwendet werden, Korrekturfaktoren als Stellgröße zu ermitteln bzw. auszugeben. Eine solche Reduzierung der Bremsleistung ist insbesondere dann bevorzugt, wenn die Energieversorgungsvorrichtung und ein optionaler Bremswiderstand, wie ein Brems-Chopper, ihre maximale Leistungsaufnahme erreicht haben. Dadurch kann vorteilhafterweise erreicht werden, dass Acku-Grenzwerte eingehalten werden und die Energieversorgungsvorrichtung nicht beschädigt wird. Insbesondere kann durch die Drehung des Stromraumzeigers ein Arbeitspunkt in der Raumzeigerdarstellung mit einem verringerten Bremsmoment erhalten werden. Das verringerte Bremsmoment kann insbesondere durch einen verkürzten Stromraumzeiger und/oder durch einen gedrehten Stromraumzeiger erhalten werden.

Die Fähigkeit, elektrische Energie aufzunehmen, kann bei einem Brems-Chopper begrenzt sein, wenn ein Einschalttastverhältnis von 100 % oder im Wesentlichen 100 % erreicht wird. Um eine solche Beschränkung durch das Einschalttastverhältnis zu umgehen, kann es im Sinne der Erfindung bevorzugt sein, einen vergleichsweise niederohmigen Brems-Chopper zu verwenden. Vorzugsweise kann der Brems-Chopper einen elektrischen Widerstand aufweisen, der in einem Bereich von 0,1 bis 2 Ohm liegt. Solche Brems-Chopper oder Bremswiderstände werden im Sinne der Erfindung bevorzugt als "niederohmige Brems-Chopper" bezeichnet.

Da die Werkzeugmaschine einen Brems-Chopper umfasst, kann eine Energieverteilung bei dem vorgeschlagenen Bremsverfahren wie folgt beschrieben werden: Zunächst wird die freiwerdende Bremsenergie in die Energieversorgungsvorrichtung zurückgespeist. Wenn die Energieversorgungsvorrichtung die Bremsenergie bzw. die Bremsleistung nicht mehr aufnehmen kann, kann die verbleibenden überschüssige Energie in den Brems-Chopper geleitet werden. Wenn der Brems-Chopper die Bremsenergie bzw. die Bremsleistung nicht mehr aufnehmen kann, kann die Bremsleistung des Motors durch ein kleineres Bremsmoment reduziert werden.

Vorzugsweise kann der Bremswinkels β_brems im Sinne der Erfindung bevorzugt auch als "Statorstromraumzeigerwinkel β_brems" bezeichnet werden. Dieser Bremswinkel β_brems kann im Kontext der vorliegenden Erfindung wie folgt berechnet werden:

$$\beta_{brems} = k_{red} \cdot ( \beta_{brems,\, MTPA} - \beta_{brems,\, 0\, Nm} ) + \beta_{brems,\, 0\, Nm}.$$

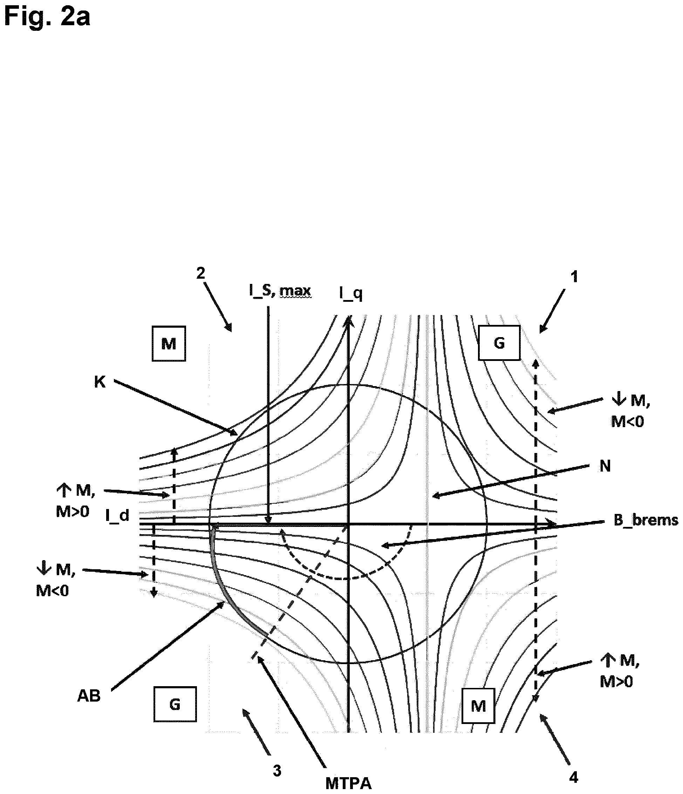

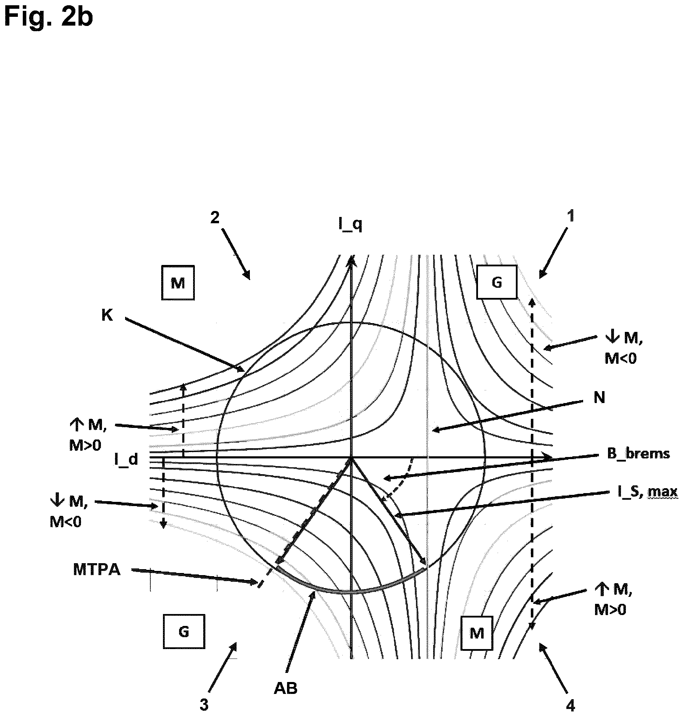

Der Parameter $\beta_{brems,\, MTPA}$ entspricht vorzugsweise dem Winkel auf der MTPA-Kennlinie, während der Parameter $\beta_{brems,\, 0\, Nm}$ dem Stromraumzeigerwinkel entspricht, mit dem ein Arbeitspunkt mit einer Momentenbildung von 0 Nm oder im Wesentlichen 0 Nm erreicht wird. Dieser Arbeitspunkt kann beispielsweise im dritten Quadranten oder im vierten Quadranten der Raumzeigerdarstellung liegen. Dabei soll zum dritten Quadranten explizit auch die Grenze zum zweiten Quadranten zählen (Begrenzung des dritten Quadranten nach oben) und zum vierten Quadranten explizit auch die Grenze zum ersten Quadranten (Begrenzung des vierten Quadranten nach oben). Wie in Figur 2a zu sehen ist, liegt an der Grenze des dritten zum zweiten Quadranten der Schnittpunkt des Stromlimit-Kreises K mit der 0 Nm-Kennlinie der Raumzeigerdarstellung und es wird vorzugsweise kein Drehmoment erzeugt. Wie in Figur 2b zu sehen ist, kann auch der Schnittpunkt des Stromlimit-Kreises K mit der 0 Nm-Kennlinie im vierten Quadranten liegen. Aus dem maximalen Statorstrom I_S, max und dem Stromraumzeigerwinkel $\beta_{brems}$ können vorteilhafterweise die Sollstromwerte, vorzugsweise für die d-Achse und die q-Achse der Raumzeigerdarstellung, berechnet.

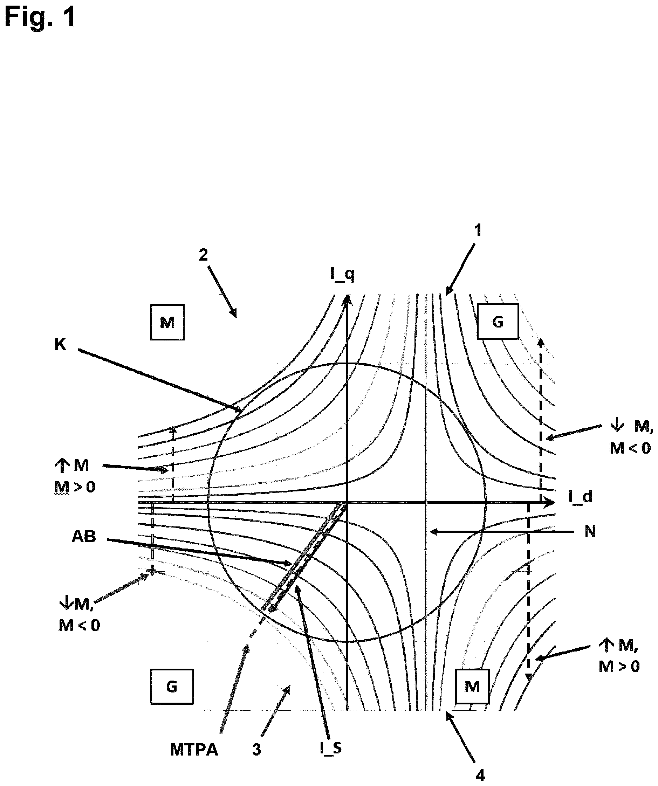

In der entsprechenden Raumzeigerdarstellung (vgl. Figur 1) ist der Arbeitsbereich AB des sog. Stromraumzeigers I_S dargestellt. Ohne eine Begrenzung der Energierückspeisung, d.h. der "Akku-Rekuperation", ergibt sich der längste Stromraumzeigers I_S auf der MTPA-Kennlinie. Der Stromraumzeiger I_S stellt insbesondere einen Statorstromraumzeiger dar, d.h. es wird insbesondere der Raumzeiger für den Statorstrom des Elektromotors der Werkzeugmaschine dargestellt. Es ist im Sinne der Erfindung bevorzugt, dass der Stromraumzeiger I_S durch ein Stromlimit des Inverters der Elektronik der Werkzeugmaschine begrenzt wird. Dieses Stromlimit des Inverters ist in der in Figur 1 abgebildeten Raumzeigerdarstellung ebenfalls dargestellt, und zwar als Kreis K. Vorzugsweise kann der Stromraumzeiger I_S bei Erreichen des Akku-Grenzwerts für die Spannung (U_Akku, max) und/oder bei Erreichen des Akku-Grenzwerts für den Strom (I_Akku, max) so weit verkürzt werden, dass die Akku-Grenzwerte nicht überschritten werden. Die Verkürzung des Stromraumzeiger I_S erfolgt vorzugsweise durch die Anwendung des mindestens einen Korrekturfaktors k.

Es ist im Sinne der Erfindung bevorzugt, dass das Werkzeug der Werkzeugmaschine mit einer Bremszeit von in einem Bereich von 2 bis 4 Sekunden gestoppt wird. Das Abbremsen des Werkzeugs der Werkzeugmaschine mit einer Bremszeit zwischen 2 und 4 Sekunden (s) kann insbesondere die Bauteile und Komponenten im Antriebsstrang der Werkzeugmaschine schonen. Es ist im Sinne der Erfindung bevorzugt, dass das Bremsmoment der Werkzeugmaschine so eingestellt werden kann, dass Bremszeiten zwischen 2 und 4 s erreicht werden können.

Wenn von der Werkzeugmaschine ein Kickback-Ereignis erkannt wird, kann es im Sinne der Erfindung bevorzugt sein, dass das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden gestoppt wird. Auf diese Weise kann das Werkzeug der Werkzeugmaschine so schnell, wie möglich, abgebremst werden, um den Nutzer der Werkzeugmaschine optimal vor Verletzungen zu schützen. Die Formulierung, dass die Werkzeugmaschine oder ihr Werkzeug gestoppt wird, bedeutet im Sinne der Erfindung, dass das Werkzeug der Werkzeugmaschine zum Stillstand gebracht wird. Die Formulierung, dass die Werkzeugmaschine oder ihr Werkzeug gestoppt wird, kann aber im Sinne der Erfindung ebenso gut bedeuten, dass dem Werkzeug ein Großteil seiner Rotationsenergie genommen wird und sich das Werkzeug der Werkzeugmaschine nur noch in einem für den Nutzer weniger gefährlichen Drehzahlbereich weiterdreht. Die Formulierung "Großteil seiner Rotationsenergie" kann im Sinne der Erfindung bevorzugt bedeuten, dass mehr als 50 % der Rotationsenergie des Werkzeugs in eine andere Energieform umgewandelt und/oder in die Energieversorgungsvorrichtung zurückgespeist werden. Es ist im Sinne der Erfindung ganz besonders bevorzugt, dass im Kontext des vorgeschlagenen Bremsverfahrens mehr als 60 %, 70 %, 80 %, 90 % oder 95 % der Rotationsenergie des Werkzeugs in eine andere Energieform umgewandelt und/oder in die Energieversorgungsvorrichtung zurückgespeist werden. Vorzugsweise kann das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden so abgebremst werden, dass das Werkzeug der Werkzeugmaschine einen Großteil seiner Rotationsenergie verliert. Das bedeutet im Sinne der Erfindung bevorzugt, dass dem Werkzeug der Werkzeugmaschine mehr als 50 %, bevorzugt mehr als 60 %, 70 %, 80 %, 90 % oder 95 % einer Rotationsenergie entzogen wird und dass mehr als 50 %, bevorzugt mehr als 60 %, 70 %, 80 %, 90 % oder 95 % der Rotationsenergie in eine andere Energieform umgewandelt und/oder in die Energieversorgungsvorrichtung zurückgespeist wird. Selbstverständlich sind auch alle Zwischenwerte zwischen 50 und 100 % möglich, die mit der Formulierung "Großteil der Rotationsenergie" gemeint sein sollen, also beispielsweise mehr als 53 %, mehr als 66,66 %, mehr als 75 %, mehr als 87,5 % oder mehr als 93,76 %.

Das Abbremsen der Werkzeugmaschine bzw. ihres Werkzeugs erfolgt dabei durch das vorgeschlagene Bremsverfahren, bei dem die Bremsleistung der Werkzeugmaschine dann reduziert wird, wenn mindestens ein Grenzwert der Energieversorgungsvorrichtung überschritten wird und diese zusätzlich freiwerdende Bremsenergie nicht mehr durch den Brems-Chopper aufgenommen werden kann.

In einem zweiten Aspekt betrifft die Erfindung eine Werkzeugmaschine zur Durchführung des vorgeschlagenen Verfahrens. Die für das Bremsverfahren eingeführten Begriffe, Definitionen und technische Vorteile gelten vorzugsweise für die Werkzeugmaschine analog. Der Motor der Werkzeugmaschine ist ein bürstenloser Motor, der vorzugsweise eine Leistung von mehr als 1,8 Kilowatt (kW) abgeben kann. Vorzugsweise kann es sich bei der Werkzeugmaschine um ein bürstenlos gesteuertes Elektrogerät mit Bremsfunktion handeln. Beispielsweise kann die Werkzeugmaschine als elektrisch betriebener Trennschleifer ausgebildet sein. Es ist im Sinne der Erfindung ganz besonders bevorzugt, dass es sich bei der Werkzeugmaschine um einen akkubetriebenen Trennschleifer mit einer Trennscheibe als Werkzeug handelt. Die Werkzeugmaschine kann mit mindestens einer Energieversorgungsvorrichtung verbunden werden, um von der Energieversorgungsvorrichtung mit elektrischer Energie versorgt zu werden. Die mindestens eine Energieversorgungsvorrichtung der Werkzeugmaschine kann beispielsweise eine Spannung von mehr als 20 Volt (V) abgeben. Besonders bevorzugt ist eine Spannung zwischen 21 und 22 V. Die Werkzeugmaschine kann auch zwei oder mehr Energieversorgungsvorrichtungen aufweisen. Wenn die Werkzeugmaschine mehr als eine Energieversorgungsvorrichtung aufweist, kann die elektrische Energie, die beim Abbremsen der Werkzeugmaschine frei wird, in die erste und/oder in die zweite Energieversorgungsvorrichtung zurückgespeist werden. Dieses Rekuperieren kann im Wesentlichen gleichzeitig, nacheinander oder gemäß einem speziell dafür vorgesehenen Algorithmus erfolgen.

Die Trennscheibe stellt ein scheibenförmiges Werkzeug des Trennschleifers dar, das mit dem vorgeschlagenen Bremsverfahren abgebremst und zum Stillstand gebracht werden kann. Die Trennscheibe kann einen Durchmesser aufweisen, der beispielsweise größer als 230 Millimeter (mm) ist. Beispielsweise kann die Trennscheibe Durchmesser von 300 mm, 250 mm oder 400 mm aufweisen, ohne darauf beschränkt zu sein. Ein Gewicht der Trennscheibe kann beispielsweise in einem Bereich zwischen 200 und 2.500 Gramm, d.h. zwischen 0,2 und 2,5 Kilogramm (kg), liegen. Beispielsweise kann das Gewicht der Trennscheibe Werte von 210 Gramm, 530 Gramm, 550 Gramm, 930 Gramm, 1.270 Gramm, 1.280 Gramm, 1.720 Gramm oder 2.450 Gramm annehmen, ohne darauf beschränkt zu sein. Beispielsweise kann es sich bei der Trennscheibe mit eine Diamant-Trennscheibe oder um eine abrasive Trennscheibe mit gebundenen Schleifkörnern handeln. Ein Diamant-Trennscheibe ist vorzugsweise dadurch gekennzeichnet, dass sie einen Stahlkern mit Diamant-Segmenten aufweist.

Es ist im Sinne der Erfindung bevorzugt, dass der Motor der Werkzeugmaschine mit Hilfe einer feldorientierten Regelung oder einer Blockkommutierung regelbar ist. In einer bevorzugten Ausgestaltung der Erfindung ist es bevorzugt, dass der Bremswinkel $\beta\_brems$ geändert werden kann, um die Bremsleistung der Werkzeugmaschine zu reduzieren und den Stromraumzeiger $I\_S$, max in der Raumzeigerdarstellung zu drehen. Wenn der Motor der Werkzeugmaschine mit einer Blockkommutierung geregelt wird, kann es im Sinne der Erfindung auch bevorzugt sein, dass die Kommutierungswinkel geändert werden, um die Bremsleistung der Werkzeugmaschine zu reduzieren. In einer bevorzugten Ausgestaltung werden die Kommutierungswinkel derart geändert, dass die dadurch entstehenden Kommutierungsblöcke nacheilend sind. Die Werkzeugmaschine kann einen Brems-Chopper umfassen, wobei der Brems-Chopper dazu eingerichtet ist, elektrische Energie, die beim Bremsen des Werkzeugs der Werkzeugmaschine frei wird, aufzunehmen. Der Brems-Chopper ist insbesondere dazu eingerichtet ist, neben der Energieversorgungsvorrichtung zusätzliche elektrische Energie aufzunehmen, die die Energieversorgungsvorrichtung aufgrund einer begrenzten Leistungsaufnahme nicht mehr aufnehmen kann.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1        Arbeitsbereich eines möglichen Statorstromraumzeigers in einer Raumzeigerdarstellung bei effizientem generatorischem Bremsbetrieb;

Fig. 2a, b    Arbeitsbereich eines möglichen Statorstromraumzeigers in einer Raumzeigerdarstellung bei maximal verlustbehaftetem generatorischem Bremsbetrieb;

Fig. 3        mögliches Blockschaltbild «Rekuperation» mit effizientem generatorischem Bremsbetrieb ohne Brems-Chopper;

Fig. 4        mögliches Blockschaltbild «Rekuperation» mit effizientem generatorischem Bremsbetrieb mit Brems-Chopper;

Fig. 5        mögliches Blockschaltbild «Rekuperation» mit maximal verlustbehaftetem generatorischem Bremsbetrieb ohne Brems-Chopper;

Fig. 6        mögliches Blockschaltbild «Rekuperation» mit maximal verlustbehaftetem generatorischem Bremsbetrieb mit Brems-Chopper;

Fig. 7        schematische Auftragung der Drehzahl gegen die Zeit zur Verdeutlichung der Brems- und Beschleunigungszeit;

Fig. 8    schematische Auftragung der Drehzahl gegen die Zeit zur Verdeutlichung der Brems- und Beschleunigungszeit;

Fig. 9    schematische Darstellung einer Ausgestaltung der vorgeschlagenen Werkzeugmaschine;

Fig. 10    erfindungsgemäßes Blockschaltbild «Rekuperation» mit effizientem generatorischem Bremsbetrieb mit Brems-Chopper und Reduktion des Motorstroms durch Drehung des Stromzeigers;

Fig. 11    erfindungsgemäßes Blockschaltbild «Rekuperation» mit effizientem generatorischem Bremsbetrieb mit Brems-Chopper und Reduktion des Motorstroms durch Kürzung des Stromzeigers;

Fig. 12    schematische Darstellung eines Mapping-Algorithmus.

**Ausführungsbeispiele und Figurenbeschreibung:**

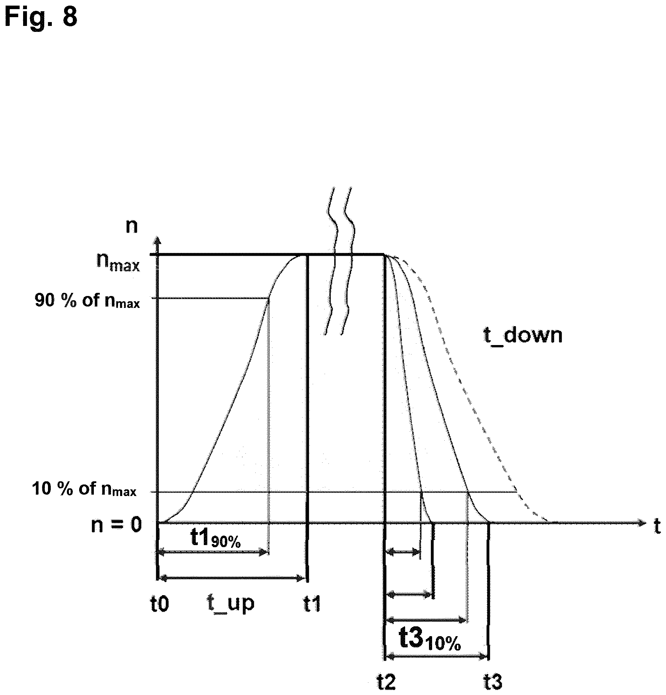

Figur 1 zeigt eine möglich Raumzeigerdarstellung, die den Betrieb einer Werkzeugmaschine 10 abbildet. Insbesondere zeigt Figur 1 den Arbeitsbereich AB eines möglichen Statorstromraumzeigers I_S in einer solchen Raumzeigerdarstellung in einem effizientem generatorischem Bremsbetrieb der Werkzeugmaschine 10. Auf der x-Achse der Raumzeigerdarstellung ist der I_d-Wert des Stromes, der durch den Motor 12 der Werkzeugmaschine 10 fliesst, dargestellt. Eine Werkzeugmaschine 10 ist schematisch in Fig. 8 dargestellt.
Auf der y-Achse der Raumzeigerdarstellung ist der I_q-Wert des Stromes, der durch den Motor 12 der Werkzeugmaschine 10 fliesst, dargestellt. Der Wert I_q steht für die momentbildenden Komponente des Stromes, während der Wert I_d für die feldbildenden Stromkomponente steht.
In Figur 1 sind die vier Quadranten 1, 2, 3 und 4 einer Raumzeigerdarstellung dargestellt. Der erste Quadrant 1 ist durch ein negativ ansteigendes Drehmoment ↓M und einen Generatorbetrieb G gekennzeichnet. Der zweite Quadrant 2 ist durch ein positiv ansteigendes Drehmoment ↑M und einen Motorbetrieb M gekennzeichnet. Der dritte Quadrant 3 ist durch ein negativ ansteigendes Drehmoment ↓M und einen Motorbetrieb M gekennzeichnet. Der vierte Quadrant 4 ist durch ein positiv ansteigendes Drehmoment ↑M und einen Generatorbetrieb G gekennzeichnet. Die ansteigenden bzw. abfallenden Drehmomente der Drehmomenthyperbeln werden in den Figuren 1 und 2 durch gestrichelte Pfeile symbolisiert. Die Drehmomenthyperbeln werden vorzugsweise von Arbeitspunkten mit gleichem Drehmoment gebildet. In Figur 1 ist ein Kreis K eingezeichnet, wobei der Kreis K das Stromlimit eines Inverters der Werkzeugmaschine 10 darstellt. Der Kreis K bzw. das Stromlimit des Inverters liegt zu gleichen Teilen in den vier Quadranten 1, 2, 3, 4 der Raumzeigerdarstellung, was gleichbedeutend damit ist, dass ein Mittelpunkt des Kreises K mit dem Schnittpunkt der y- und der x-Achse der Raumzeigerdarstellung zusammen fällt. Der Arbeitsbereich AB des Statorstromraumzeigers I_S ist im dritten Quadranten 3 der Raumzeigerdarstellung eingezeichnet. In der in Figur 1 dargestellten Raumzeigerdarstellung fällt der Arbeitsbereich AB des Statorstromraumzeigers I_S mit der MTPA-Kennlinie der Werkzeugmaschine 10 zusammen. Der Motor 12 der Werkzeugmaschine 10 wird dadurch vorteilhafterweise an einem wirkungsgradoptimierten Arbeitspunkt betrieben, in dem die Stromwärmeverluste minimal sind.
Durch den ersten Quadranten 1 und den vierten Quadranten 4 verläuft die 0 Nm-Kennlinie N, die im Wesentlichen parallel zu der y-Achse der Raumzeigerdarstellung verläuft. Darüber hinaus ergibt sich eine zweite 0 Nm-Kennlinie N2, welche auf der x-Achse verläuft bzw. mit der x-Achse zusammenfällt (daher nicht dargestellt). Die in Figur 1 abgebildete Raumzeigerdarstellung zeigt eine Werkzeugmaschine 10 bzw. deren Betrieb, bei der die Bremsleistung der Werkzeugmaschine 10 dadurch reduziert wird, dass mindestens ein Korrekturfaktor k ermittelt und auf einen maximalen Motorstrom I_S, max der Werkzeugmaschine 10 angewendet wird, so dass ein reduzierter Sollwert I_S, red für den Motorstrom erhalten wird. Dies entspricht einem effizienten generatorischen Bremsbetrieb der Werkzeugmaschine 10.
In den Figuren 2a und 2b wird eine Raumzeigerdarstellung eines maximal verlustbehafteten generatorischen Bremsbetriebs einer Werkzeugmaschine 10 dargestellt. Abweichend zu Figur 1, wird bei den in Figur 2 dargestellten Bremsverfahren ein Stromraumzeigers I_S, max in der Raumzeigerdarstellung durch Anwendung eines geänderten Bremswinkels β_brems gedreht, so dass eine Länge des Stromraumzeigers I_S, max im Wesentlichen unverändert bleibt und die Bremsleistung der Werkzeugmaschine 10 reduziert wird. Der Stromraumzeigers I_S, max befindet sich anfänglich im dritten Quadranten 3 der Raumzeigerdarstellung, gelangt aber durch die Drehung in Figur 2a auf die Grenze zwischen dem zweiten Quadranten 2 und dem dritten Quadranten 3. Der Stromraumzeigers I_S, max befindet sich anfänglich im dritten Quadranten 3 der Raumzeigerdarstellung, gelangt aber durch die Drehung in Figur 2b in den vierten Quadranten 4. Der Bremswinkel β_brems ist ebenfalls im vierten Quadranten 4 der Raumzeigerdarstellung eingezeichnet. Der gedrehte Stromraumzeiger I_S, max schneidet im vierten Quadranten 4 den Kreisbereich K, der das Stromlimit des Inverters der Elektronik der Werkzeugmaschine 10, wobei dieser Schnittpunkt des gedrehten Stromraumzeigers I_S, max und des Kreisbereichs K in dem in Figur 2 abgebildeten Beispiel mit dem Schnittpunkt des Kreisbereichs K und der 0 Nm-Kennlinie N zusammen fällt. Der Arbeitsbereich AB ist daher auf Arbeitspunkte zwischen den Zuständen "maximales Bremsmoment" und "kein Bremsmoment, d.h. 0 Nm" begrenzt.

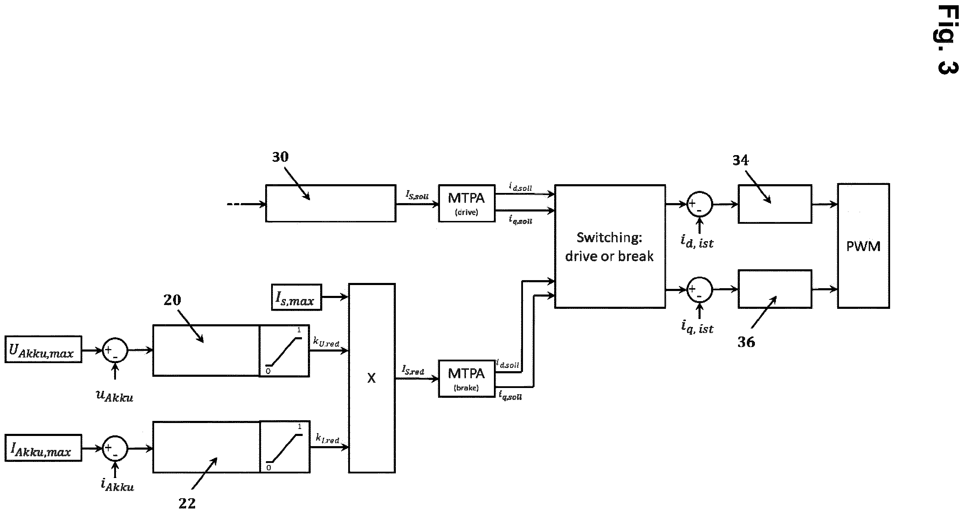

Es sei angemerkt, dass die in den Figuren 3 bis 6 dargestellten Blockschaltbilder beispielhaft Bremsverfahren für eine Werkzeugmaschine 10 zeigen, bei denen der Motor 12 mit einer feldorientierten Regelung betrieben wird. Das vorgeschlagene Verfahren kann selbstverständlich auch mit einer Werkzeugmaschine 10 durchgeführt werden, bei der der Motor 12 mit einer Blockkommutierung geregelt wird. Der Motor 12 der Werkzeugmaschine 10 ist ein bürstenloser Motor, der vorzugsweise eine Leistung von mehr als 1.800 Watt (W) abgeben kann.

Fig. 3 zeigt ein mögliches Blockschaltbild «Rekuperation» mit effizientem generatorischem Bremsbetrieb einer Werkzeugmaschine 10 ohne Brems-Chopper 18. Bei den in Figur 3 abgebildeten Bremsverfahren ist der Akkuspannungsregler 20 dazu eingerichtet, einen Korrekturfaktor $k\_U$, red für die Spannung der Energieversorgungsvorrichtung 14 auszugeben, während der Akkustromregler 22 dazu eingerichtet, einen Korrekturfaktor $k\_I$, red für den Strom der Energieversorgungsvorrichtung 14 auszugeben. Darüber hinaus ist ein Drehzahlregler 30 vorgesehen, der die Drehzahl n der Werkzeugmaschine 10 regelt. Als Ausgangs- bzw. Stellgrößen des Bremsverfahrens werden Sollstromwerte erhalten, die an die Motorstromregler 34, 36 weitergeben werden können. Bei den Sollstromwerten kann es sich vorzugsweise um Sollstromwerte für die d- und die q-Achse der Raumzeigerdarstellung handeln. Die Motorstromregler 34, 36 stellen insbesondere einen d-Strom-Regler 34 und einen q-Strom-Regler 36 dar, wobei die Motorstromregler 34, 36 ihre Steuerbefehle an die Pulsweitenmodulation PWM weitergeben.

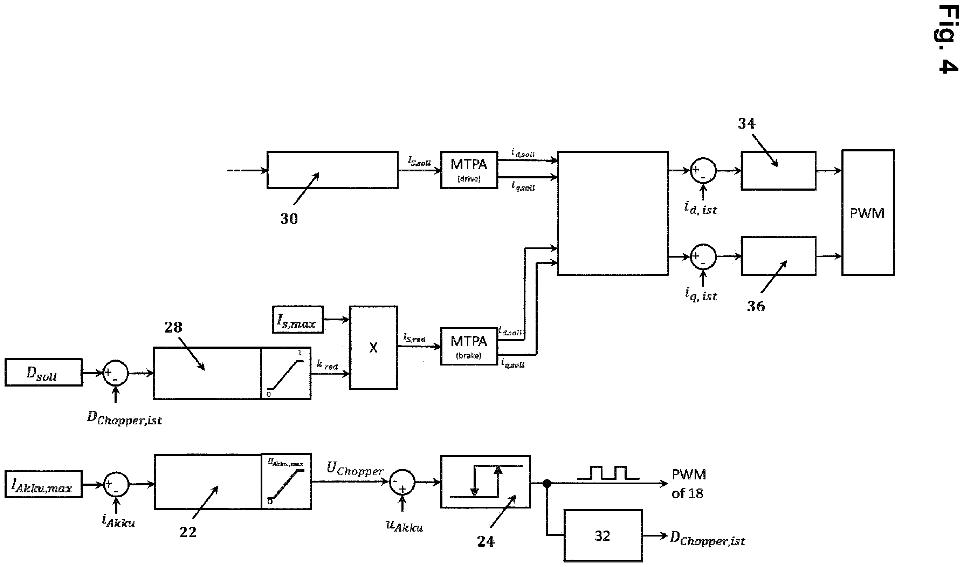

Fig. 4 zeigt ein mögliches Blockschaltbild «Rekuperation» mit effizientem generatorischem Bremsbetrieb einer Werkzeugmaschine 10 mit Brems-Chopper 18. In dem in Figur 4 dargestellten Blockschaltbild sind der Akkustrom-Regler 22, der Drehzahlregler 30 und die Motorstromregler 34, 36 abgebildet, die bereits aus Figur 3 und dem dort gezeigten Blockschaltbild bekannt sind. Darüber hinaus ist in Figur 4 ein Tastverhältnis-Regler 28 dargestellt, der auch als «dritter Regler» bezeichnet werden kann und zur Begrenzung des Tastverhältnis auf einen Sollwert $D\_soll$ von beispielsweise 95 % verwendet wird. Der Ausgangswert dieses dritten Reglers ist ein Korrekturfaktor $k\_red$, der zwischen den Werten 0 und 1 liegt. Dieser Korrekturfaktor $k\_red$ kann mit dem Strom $I\_S$, max multipliziert werden, um den reduzierten Motorstatorsollstrom $I\_S$, red zu erhalten.

Darüber hinaus zeigt das in Figur 4 dargestellte Blockschaltbild einen Zweipunktregler 24 mit Hysterese, der als «erster Regler» bezeichnet wird. Dieser erste Regler 24 wird vorzugsweise zur Ansteuerung des als «Brems-Chopper» bezeichneten Bremswiderstands 18 verwendet. Der erste Regler 24 kann beispielsweise als Komparator mit Schalthysterese ausgebildet sein und dazu eingerichtet sein, eine Zwischenkreisspannng mit einer Referenzspannung zu vergleichen. Die Zwischenkreisspannng kann vorzugsweise auch als Akkuspannung $u\_Akku$ bezeichnet werden, während die Referenzspannung in Figur 4 mit der Bezeichnung «U_Chopper» bezeichnet wird. Der erste Regler 24 gibt als Ausgangssignal ein PWM-Signal aus, das ein High-Pegel ausgibt, wenn die Akkuspannung größer ist als die Referenzspannung, d.h. $u\_Akku > u\_Chopper$. Ein Tastverhältnis des PWM-Signals kann beispielsweise durch den in Figur 4 dargestellten Tiefpassfilter 32 gebildet werden. Zeitliche veränderliche Werte oder Größen werden in dieser Spezifikation mit Kleinbuchstaben werden, während konstante Werte oder Größen, wie Grenzwerte oder andere vorgegebene Werte, mit Großbuchstaben bezeichnet werden.

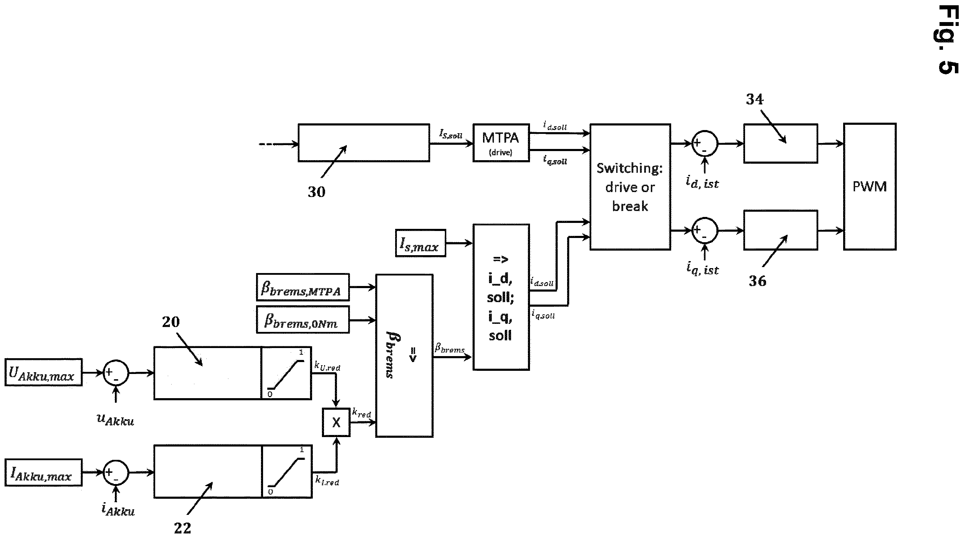

Fig. 5 zeigt ein mögliches Blockschaltbild «Rekuperation» mit maximal verlustbehaftetem generatorischem Bremsbetrieb einer Werkzeugmaschine 10 ohne Brems-Chopper 18. Ähnlich zu dem Blockschaltbild der Figur 3 werden bei dem in Figur 5 beschriebenen Bremsverfahren Korrekturfaktoren $k\_U$, red und $k\_I$, red ausgegeben, die zu einem gemeinsamen Korrekturfaktor $k\_red$ zusammengefasst werden können. Der in Figur 5 verwendete Korrekturfaktor $k\_red$ ergibt sich vorzugsweise aus einer Kombination der Korrekturfaktoren $k\_U$, red und $k\_I$, red für die Spannung und den elektrischen Strom. Der Korrekturfaktor $k\_red$ hat in dem in Figur 5 dargestellten Beispiel, in der vorzugsweise kein Brems-Chopper 18 verwendet wird, keinen Anteil, der auf ein Tastverhältnis des Brems-Choppers 18 zurückgeht.

Insbesondere kann der Korrekturfaktor $k\_U$, red vom Akkuspannungs-Regler 20 und der Korrekturfaktor $k\_I$, red vom Akkustrom-Regler 22 ermittelt werden. Aus den Korrekturfaktoren $k\_U$, red und $k\_I$, red kann der kombinierte Korrekturfaktor $k\_red$ berechnet werden, der verwendet werden kann, um den Statorstromraumzeigerwinkel oder Bremswinkel $\beta\_brems$ zu berechnen. Dazu werden die Winkel $\beta\_brems$, MTPA und $\beta\_brems$, 0 Nm voneinander abgezogen und mit dem kombinierten Korrekturfaktor $k\_red$ multipliziert. Zu dem Produkt kann der $\beta\_brems$, 0 Nm erneut hinzuaddiert werden, so dass der Bremswinkel $\beta\_brems$ erhalten wird. Der Parameter $\beta\_brems$, MTPA steht vorzugsweise für den Winkel auf der MTPA-Kennlinie, während der Parameter $\beta\_brems$, 0 Nm dem Statorstromraumzeigerwinkel im vierten Quadranten 4 der Raumzeigerdarstellung oder dem Statorstromraumzeigerwinkel auf der x-Achse zwischen zweiten Quadranten 2 und dritten Quadranten 3 entspricht, an dem kein Drehmoment erzeugt wird. Dieser Parameter $\beta\_brems$, 0 Nm im vierten Quadranten 4 ergibt sich vorzugsweise aus dem Schnittpunkt des Stromlimit-Kreises K mit der 0 Nm-Kennlinie N. Mit Hilfe des Bremswinkels $\beta\_brems$ und des Stroms $I\_S$, max können die d- und q-Sollwerte berechnet werden, die an den d-Strom-Regler 34 und den q-Strom-Regler 36 weitergeleitet werden können.

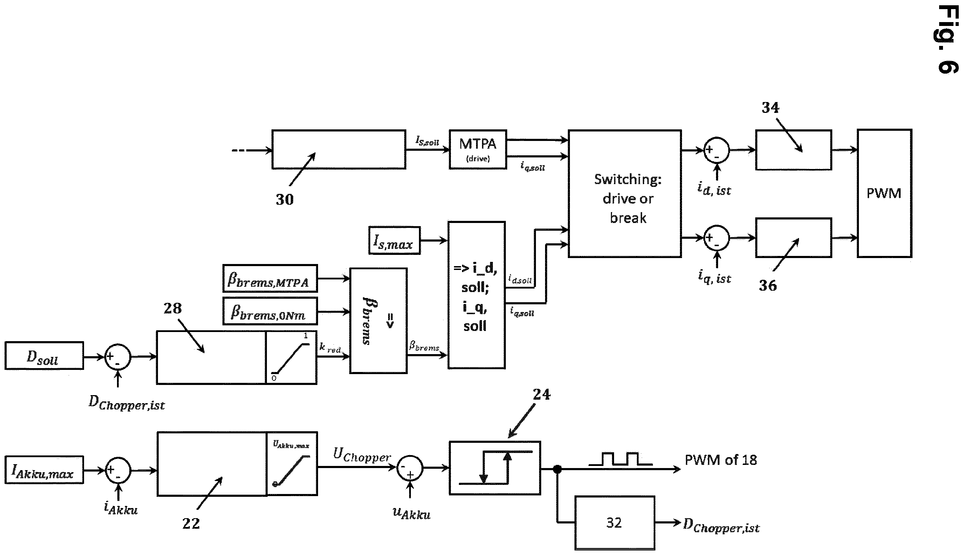

Fig. 6 zeigt ein mögliches Blockschaltbild «Rekuperation» mit maximal verlustbehaftetem generatorischem Bremsbetrieb einer Werkzeugmaschine 10 mit Brems-Chopper 18, wobei sich das in Figur 6 dargestellte Blockschaltbild in weiten Teilen eine Kombination von Elementen der Blockschaltbilder aus den Figuren 4 und 5 darstellt.

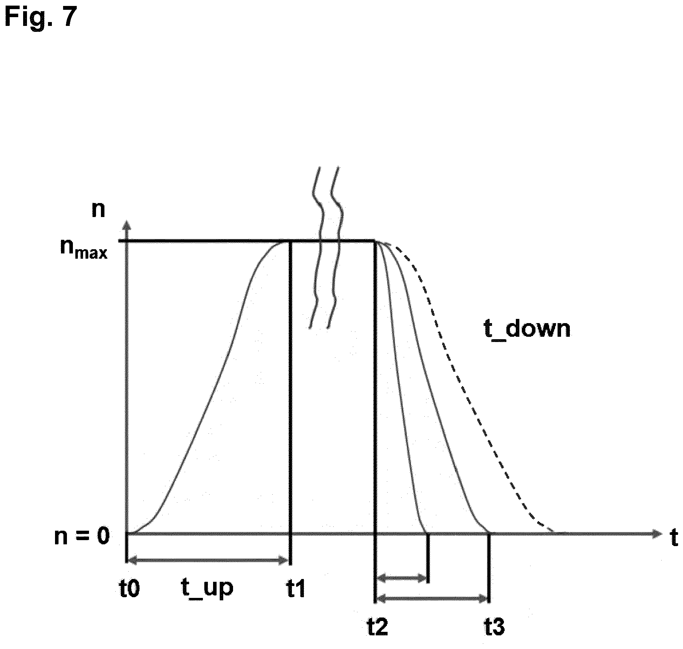

Fig. 7 zeigt eine schematische Auftragung der Drehzahl n des Motors 12 der Werkzeugmaschine 10 gegen die Zeit t zur Verdeutlichung der Bremszeit t_down und der Beschleunigungszeit t_up. Dargestellt ist ein möglicher Verlauf der Drehzahl n mit einer Unterbrechung zwischen den Zeiten t1 und t2. In der Zeitspanne zwischen den Zeiten t0 und t1 steigt die Drehzahl n der Werkzeugmaschine 10 an, um bei der Zeit t1 einen maximalen Wert n_max zu erreichen. Diese Zeitspanne zwischen den Grenzen t1 und t2 wird im Sinne dieser Spezifikation als Beschleunigungszeit t_up bezeichnet. Von dem maximalen Drehzahlwert n_max kann die Werkzeugmaschine 10 durch einen Abbremsvorgang zum Stillstand gebracht werden. Bei konventionell arbeitenden Werkzeugmaschinen kann ein solcher Bremsvorgang gemäß der gestrichelten Linie in Figur 7 erfolgen und beispielsweise länger dauern als die Beschleunigungszeit t_up. Ein Verhältnis aus Bremszeit und Beschleunigungszeit kann in diesem Fall größer als 1 sein, weil die Bremszeit t_down größer ist als die Beschleunigungszeit t_up. Bei der in Figur 7 dargestellten Auftragung der Drehzahl n gegen die Zeit t wird die Bremszeit t_down von den Zeiten t2 und t3 begrenzt.

Vorzugsweise verläuft das Bremsen der Werkzeugmaschine 10 gemäß der beiden durchgezogenen Linien in Figur 7. Das Abbremsen erfolgt gemäß einem normalen Abbremsvorgang gemäß der rechten durchgezogenen Linie, wobei eine Bremszeit t_down in einem Bereich zwischen 2 und 4 Sekunden liegt. In einem solchen Fall kann das Verhältnis aus Bremszeit und Beschleunigungszeit kleiner als 1 sein, d.h. die Bremszeit t_down ist kleiner als die Beschleunigungszeit t_up. Nach Erkennung eines Kickback-Falls kann die Werkzeugmaschine 10 bzw. ihr Werkzeug 16 in weniger als 1,5 Sekunden abgebremst werden. Ein solcher Schnell- oder Kickback-Bremsvorgang wird durch die linke durchgezogene Linie in Figur 7 dargestellt. In einem solchen Fall kann das Verhältnis aus Bremszeit und Beschleunigungszeit kleiner als 0,7, bevorzugt kleiner als 0,5 sein, d.h. die Bremszeit t_down ist deutlich kleiner als die Beschleunigungszeit t_up. Beispielsweise kann die Bremszeit t_down kleiner als 70 %, bevorzugt kleiner als 50 % der Beschleunigungszeit t_up sein.

Figur 8 zeigt ebenfalls eine schematische Auftragung der Drehzahl n des Motors 12 der Werkzeugmaschine 10 gegen die Zeit t zur Verdeutlichung der Bremszeit t_down und der Beschleunigungszeit t_up. Die Erfinder haben erkannt, dass mit verringerter Drehzahl die rotierende Trennscheibe 16 nur noch sehr wenig Rotationsenergie hat und daher eine geringe Gefährdung für den Anwender der Werkzeugmaschine 10 darstellt. Es kann ausreichend sein, dass das Werkzeug 16 der Werkzeugmaschine 10 nicht vollständig zum Stillstand gebracht wird, sondern dass der Bremsvorgang bereits vorher endet, beispielsweise dann, wenn das Werkzeug 16 der Werkzeugmaschine 10 mit einer Drehzahl n von weniger als 70 %, bevorzugt weniger als 63 %, 55 %, 45 %, 32 % oder 22 % der ursprünglichen Drehzahl n_max des Werkzeugs 16 rotiert. Selbstverständlich kann das Werkzeug 16 der Werkzeugmaschine 10 auch mit einem noch geringeren Anteil der ursprünglichen Drehzahl n_max rotieren, bis es beispielsweise bis zum Stillstand abgebremst wird. Das Ende der Bremszeit t_down wird dann entsprechend durch Endzeiten t3_70 %, t3_63 %, t3_55 %, t3_45 %, t3_32 %, oder t3_22 % festgelegt. Selbstverständlich sind auch alle Zwischenwerte zwischen 70 und 0 % möglich, wie zum Beispiel 67 %, 57,5 %, 43,33 %, 2,56 % usw. Es ist bevorzugt, dass dem Werkzeug 16 der Werkzeugmaschine 10 der größere Teil seiner Rotationsenergie entzogen und in die Energieversorgungsvorrichtung 14 der Werkzeugmaschine 10 zurückgespeist wird. Durch die Wegnahme des Großteils der Rotationsenergie kann das Werkzeug 16 der Werkzeugmaschine 10 bereits so stark abgebremst werden, dass die rotierende Trennscheibe 16 keine Gefahr mehr für den Nutzer der Werkzeugmaschine 10 darstellt. Wenn die Bremszeit t_down nicht erst bei Stillstand des Werkzeugs 16 der Werkzeugmaschine 10 endet, sondern bereits dann, wenn sich das Werkzeug 16 der Werkzeugmaschine 10 nur noch mit weniger als 70 %, bevorzugt weniger als 63 %, 55 %, 45 %, 32 %, 22 % der ursprünglichen Drehzahl n_max des Werkzeugs 16 dreht, dann kommt es vorteilhafterweise auf die Zeitspanne bis zum tatsächlichen Stillstand des Werkzeugs der Werkzeugmaschine nicht mehr an, denn die Bremszeit t_down bzw. deren Endpunkt t3 wird durch das Erreichen der geringeren Drehzahl festgelegt.

Es ist möglich, dass die Werkzeugmaschine 10 oder ihr Werkzeug 16 mit einem reduzierten Gradienten mit einer anderen Steigung zum Stillstand gebracht wird.

In der in Figur 8 dargestellten Auftragung der Drehzahl n gegen die Zeit t sind insbesondere konstante Geraden für die Werte von 90 % der maximalen Drehzahl n_max und 10 % der maximalen Drehzahl n_max eingezeichnet. Der Wert von 90 % der maximalen Drehzahl n_max bildet zusammen mit dem zugehörigen Zeitwert t1_90% ein Wertepaar, dass auf den Graphen n(t) liegt. In analogerweise bildet der Wert von 10 % der maximalen Drehzahl n_max bildet zusammen mit dem zugehörigen Zeitwert t3_10% ein Wertepaar, dass auf den Graphen n(t) liegt.

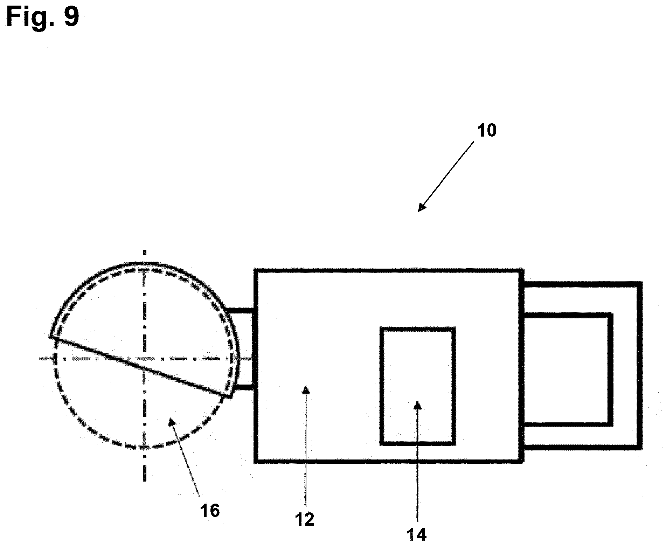

Figur 9 zeigt eine schematische Darstellung einer bevorzugten Ausgestaltung der vorgeschlagenen Werkzeugmaschine 10. Die Werkzeugmaschine 10 weist einen Motor 12 auf, der vorzugsweise als bürstenloser Motor ausgebildet ist. Die Werkzeugmaschine 10 kann ein Werkzeug 16 aufweisen, das beispielsweise als scheibenförmiges Schneidwerkzeug ausgebildet sein kann. Bei der in Figur 9 abgebildeten Werkzeugmaschine 10 handelt es sich vorzugsweise um einen Trennschleifer, mit dem Schnitte in einen Untergrund, wie Beton, eingebracht werden können. Das Werkzeug 16 der Werkzeugmaschine 10 kann von einem Blattschutz (ohne Bezugszeichen) umgeben sein, um den Nutzer der Werkzeugmaschine 10 vor Späne- und Funkenflug zu schützen. Die Werkzeugmaschine 10 kann mit mindestens einer Energieversorgungsvorrichtung 14 verbunden werden, um die Werkzeugmaschine 10 mit elektrischer Energie zu versorgen. Selbstverständlich kann die Werkzeugmaschine 10 auch zwei oder mehr Energieversorgungsvorrichtungen 14 aufweisen. Im Kontext der vorliegenden Erfindung kann elektrische Energie in die mindestens eine Energieversorgungsvorrichtung 14 zurückgespeist werden, dies insbesondere dann, wenn die Werkzeugmaschine 10 abgebremst wird. Überschüssige elektrische Energie, die die Energieversorgungsvorrichtung beschädigen könnte, kann durch den Brems-Chopper abgebaut und, falls notwendig, durch eine Reduzierung des Motorstroms verhindert werden. Die Werkzeugmaschine 10 kann darüber hinaus einen oder mehrere Handgriffe (ohne Bezugszeichen) aufweisen, mit denen der Nutzer der Werkzeugmaschine 10 die Werkzeugmaschine 10 transportieren oder bei der Arbeit führen kann.

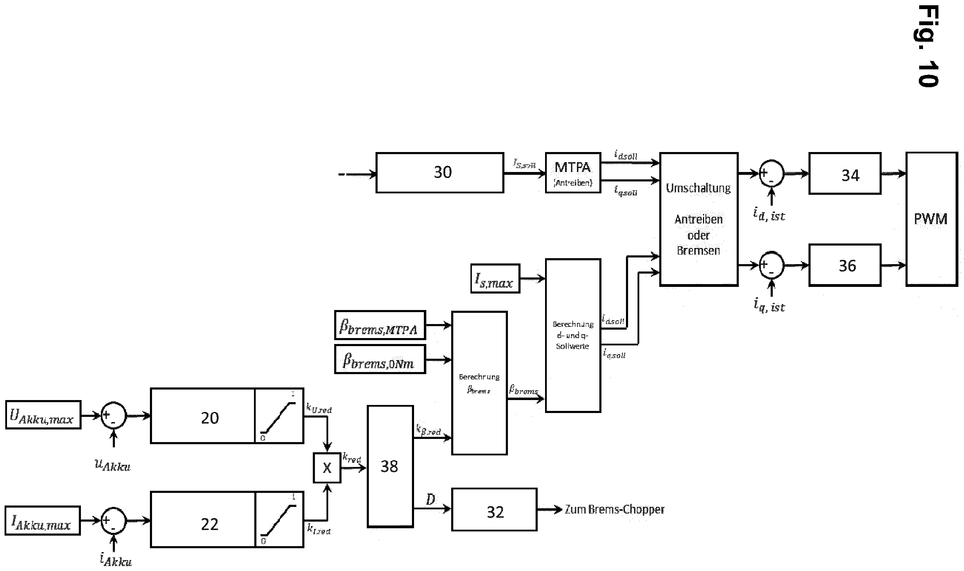

Fig. 10 zeigt ein erfindungsgemäßes Blockschaltbild eines erfindungsgemäßen Verfahrens zum Bremsen einer Werkzeugmaschine. Bei dem in Figur 10 abgebildeten Bremsverfahren ist der ein Akkuspannungsregler 20 dazu eingerichtet, einen Korrekturfaktor $k\_U$, red für die Spannung der Energieversorgungsvorrichtung (14, Fig. 9) auszugeben, während der Akkustromregler 22 dazu eingerichtet, einen Korrekturfaktor $k\_I$, red für den Strom der Energieversorgungsvorrichtung 14 auszugeben. Darüber hinaus ist ein Drehzahlregler 30 vorgesehen, der die Drehzahl n der Werkzeugmaschine 10 regelt. Als Ausgangs- bzw. Stellgrößen des Bremsverfahrens werden einerseits Sollstromwerte erhalten, die an die Motorstromregler 34, 36 weitergeben werden können. Bei den Sollstromwerten kann es sich vorzugsweise um Sollstromwerte für die d- und die q-Achse der Raumzeigerdarstellung handeln. Die Motorstromregler 34, 36 stellen insbesondere einen d-Strom-Regler 34 und einen q-Strom-Regler 36 dar, wobei die Motorstromregler 34, 36 ihre Steuerbefehle an die Pulsweitenmodulation PWM weitergeben. Andererseits wird durch das Bremsverfahren gemäß Fig. 10 eine Stellgröße für den Tastgrad D des Brems-Choppers bereitgestellt.

Das in Fig. 10 gezeigte, erfindungsgemäße Bremsverfahren unterscheidet sich vom Bremsverfahren gemäß Fig. 4 insbesondere dadurch, dass für die Steuerung des Brems-Choppers kein zusätzlicher Regler benötigt wird. Vielmehr wird gemäß des Bremsverfahrens nach Fig. 10 eine Steuerung des Brems-Choppers ausschließlich durch den Stromregler 20 und den Spannungsregler 22 erzielt. Hierzu wird insbesondere ein Mapping-Algorithmus 38 vorgeschlagen, welcher auf Basis des ersten Korrekturparameter $k\_U$, red und des zweiten Korrekturparameter $k\_I$, red (z.B. auf Basis eines Produkts des ersten und zweiten Korrekturparameters $k\_U$, red; $k\_I$, red) einerseits eine erste Stellgröße $k\_\beta$, red zur (potentiellen) Reduzierung des Motorstroms über eine Drehung des Stromzeigers ausgibt. Andererseits bestimmt der Mapping-Algorithmus 38 den Tastgrad D des Brems-Choppers als zweite Stellgröße. Bezüglich der Drehung des Stromraumzeigers sei auch auf die Ausführungen betreffend Figur 5 hingewiesen.

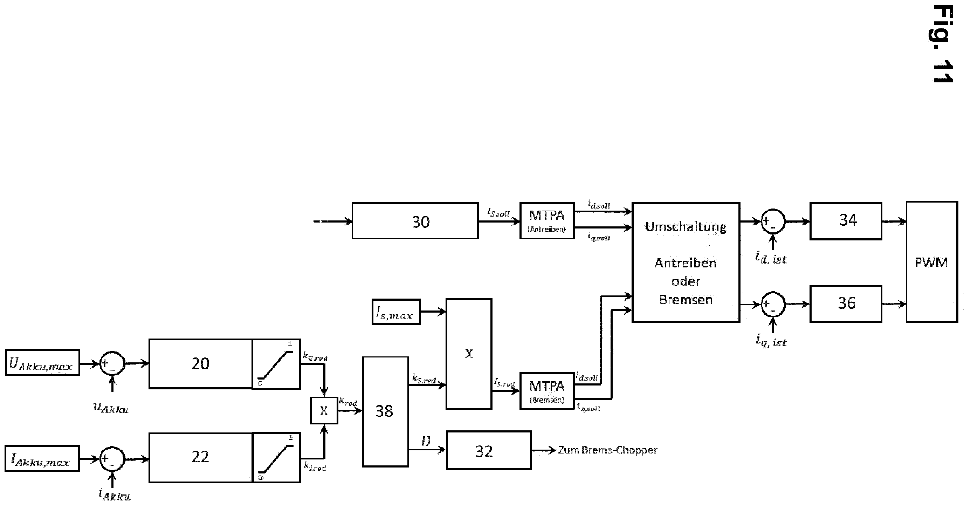

Das im Blockschaltbild gemäß Fig. 11 gezeigte Bremsverfahren unterscheidet sich von dem in Fig. 10 gezeigten Bremsverfahren insbesondere dadurch, dass zur Reduzierung des Motorstroms vorgeschlagen wird, den Stromraumzeiger $I\_S$, max zu kürzen. Bezüglich der Kürzung des Stromraumzeigers $I\_S$, max sei auch auf die Ausführungen betreffend die Figuren 3 und 4 hingewiesen.

Auch in Fig. 11 ist ein Mapping-Algorithmus 38 gezeigt, welcher auf Basis des ersten Korrekturparameter $k\_U$, red und des zweiten Korrekturparameter $k\_I$, red (z.B. auf Basis des Korrekturfaktors $k\_Red$, welcher das Produkts des ersten und zweiten Korrekturparameters $k\_U$, red; $k\_I$, red ist) einerseits eine erste Stellgröße $k\_S$, red zur (potentiellen) Reduzierung des Motorstroms über eine Kürzung des Stromzeigers ausgibt. Andererseits bestimmt der Mapping-Algorithmus 38 den Tastgrad D des Brems-Choppers als zweite Stellgröße.

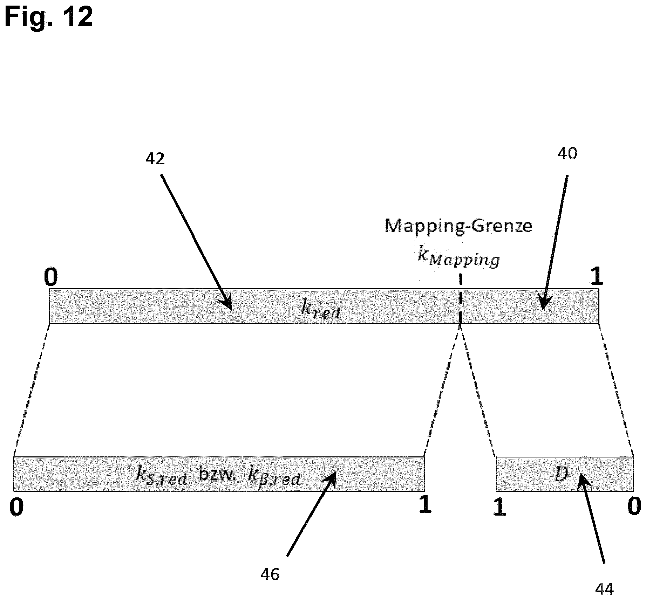

Gemäß der in den Figuren 10 und 11 gezeigten Bremsverfahren wird jeweils ein Mapping-Algorithmus verwendet, welcher dazu ausgelegt ist, aus dem Produkt der beiden Korrekturparameter, d.h. auf Grundlage des Korrekturfaktors $k\_red$, einerseits eine Stellgröße zur Reduzierung des Motorstroms und andererseits den Tastgrad D des Brems-Choppers auszugeben. Ein beispielhafter Mapping-Algorithmus ist in Fig. 12 gezeigt.

Gemäß dem Mapping-Algorithmus der Fig. 12, wird die notwendige Reduzierung der durch das Bremsen freiwerdenden Energie, zum Schutz der Energieversorgungsvorrichtung, auf einfache Weise auf den Brems-Chopper und eine Reduktion der Motorleistung aufgeteilt. Im Einzelnen wird bei hohen Korrekturfaktoren (d.h. bei nur geringen Mengen an überschüssiger Energie), lediglich der Tastgrad des Brems-Choppers verändert. Eine Reduzierung des Motorstroms erfolgt hier noch nicht, sodass die Energieversorgungsvorrichtung in diesem Bereich mit weiterhin maximal zulässiger Rückspeiseleistung geladen werden kann, ohne die Motorbremsleistung reduzieren zu müssen. Sollte der Korrekturfaktor $k\_red$ zu niedrig sein (d.h. es kommt zu großen Mengen überschüssiger Energie), so wird neben dem Einsatz des Brems-Choppers (unter Volllast) auch der Motorstrom reduziert. Der Übergang zwischen Abbau der überschüssigen Energie alleine durch den Brems-Chopper (erster Bereich 40 in Fig. 12) und einer Reduzierung des Motorstroms (d.h. Reduzierung der regenerativen Bremsleistung) zum Begrenzen der überschüssigen Energie (zweiter Bereich 42 in Fig. 12) wird als Mapping-Grenze $k\_Mapping$ bezeichnet.

In Fig. 12 ist die Mapping-Grenze beispielhaft bei $k\_red = 0{,}75$ erreicht. Ein erster Bereich 40 des Korrekturfaktors $k\_Red$, oberhalb der Mapping-Grenze $k\_Mapping$, dient der Steuerung des Brems-Choppers. Ein zweiter Bereich 42 des Korrekturfaktors $k\_Red$, unterhalb der Mapping-Grenze $k\_Mapping$, dient der Steuerung (Reduzierung) des Motorstroms. Es sei an dieser Stelle erwähnt, dass die gezeigte Mapping-Grenze $k\_Mapping$ lediglich beispielhaft ist und grundsätzlichen jeden Wert des Korrekturfaktors $k\_red$ zwischen 0 und 1 annehmen kann. Im hier gezeigten Beispiel der Mapping-Grenze bei $k\_red = 0{,}75$ wird überschüssige Energie, die beim Bremsen frei wird, durch den Brems-Chopper aufgenommen, wenn sich der Korrekturfaktor $k\_red$ im ersten Bereich 40, d.h. zwischen 0,75 und 1, befindet. In diesem ersten Bereich 40, verhält sich der Tastgrad D des Brems-Choppers direkt proportional zum Korrekturfaktor $k\_Red$. Der Brems-Chopper Tastgrad D befindet sich also in einem Tastgrad Bereich 44 zwischen 0 bis 1, wenn der Korrekturfaktor k_red im ersten Bereich 40 liegt. Mit anderen Worten, ein Korrekturfaktor k_red der mittig im ersten Bereich 40 liegt (hier k_red = 0,875) entspricht einem Tastgrad des Brems-Choppers von 0,5. Bei einem Korrekturfaktor von k_red kleiner oder gleich k_Mapping (hier 0,75) ist der Tastgrad des Brems-Choppers 1, d.h. der Brems-Chopper arbeitet mit voller Bremsleistung.

Wenn sich der Korrekturfaktor k_red unterhalb der Mapping-Grenze k_Mapping befindet (hier unterhalb 0,75), werden durch den Mapping-Algorithmus 38 (je nach Ausführungsform) entweder ein Strom-Korrekturfaktor k_S, red oder ein Bremswinkel-Korrekturfaktur k_β, red ausgegeben, um den Motorstrom und damit die beim Bremsen generierte Energie zu reduzieren. Nachfolgend soll lediglich auf eine Bestimmung des Strom-Korrekturfaktors k_S, red eingegangen werden, wobei der Ablauf äquivalent auf die Bestimmung des Bremswinkel-Korrekturfaktors k_β, red übertragbar ist.

Wie in Fig. 12 angedeutet nimmt der Strom-Korrekturfaktors k_S, red proportional mit dem Korrekturfaktor k_red ab, sobald der Korrekturfaktor k_red unterhalb der Mapping-Grenze k_Mapping ist. Im oben genannten Beispiel, d.h. wenn die Mapping-Grenze auf 0,75 bestimmt wurde, bedeutet dies, dass sich der Strom-Korrekturfaktors k_S, red im Stromkorrekturfaktor Bereich 46 zwischen 1 bis 0 liegt, wenn sich der Korrekturfaktor k_red im zweiten Bereich 42 zwischen der Mapping-Grenze k_Mapping (z.B. 0,75) und 0 befindet. Mit anderen Worten, ein Korrekturfaktor k_red der mittig im zweiten Bereich 42 liegt (hier k_red = 0,375) bedeutet einen Strom-Korrekturfaktor k_S, red von 0,5, d.h. der Motorstrom wird um 50% verringert. Bei einem Korrekturfaktor von k_red größer oder gleich k_Mapping (hier 0,75) ist der Strom-Korrekturfaktor k_S, red = 1, d.h. es kommt zu keiner Verringerung des Motorstroms, usw. Im gesamten, zweiten Bereich 42 des Korrekturfaktors k_red, ist der Tastgrad des Brems-Choppers = 1, d.h. er arbeitet unter Volllast.

Die Bestimmung des Strom-Korrekturfaktor k_S, red sowie des Taktgads D des Brems-Choppers durch den Mapping-Algorithmus 38 kann durch folgende Logik ausgedrückt werden:

$$
\begin{aligned}
&\text{if } (k_{red} \leq k_{Mapping}) \\
&\{ \\
&\qquad k_{S,red} \; bzw. \; k_{\beta,red} = \frac{k_{red}}{k_{Mapping}}; \\
&\qquad D = 1; \\
&\} \\
&\text{else} \\
&\{ \\
&\qquad D = \frac{1}{(k_{Mapping}-1)} \cdot k_{red} - \frac{1}{(k_{Mapping}-1)}; \\
&\qquad k_{S,red} \; bzw. \; k_{\beta,red} = 1; \\
&\}
\end{aligned}
$$

Wie oben bereits angedeutet, kann Die Mapping-Grenze k_Mapping ein konstanter (z.B. Herstellerseitig vorbestimmter) Wert sein oder auch dynamisch veränderbar sein. Besonders vorteilhaft ist, wenn die Mapping-Grenze k_Mapping dynamisch berechnet wird, sodass sich immer näherungsweise eine Arbeitsgerade ohne Knick ergibt. Ein bevorzugter Wert für die Mapping-Grenze k_Mapping kann wie dementsprechend wie folgt berechnet werdend:

$$
k_{Mapping,opt} = \frac{P_{mech}}{P_{mech} + P_{Chopper}}
$$

wobei $P_{mech}$ = mechanische Bremsleistung der Werkzeugmaschine, und $P_{chopper}$ = Bremsleitung des Choppers.

Für ein Beispiel von $P_{mech}$ = 3000 W und $P_{Chopper}$ = 1000 W ergibt sich daher die oben beispielhaft erwähnte Mapping-Grenze von k_Mapping = 3000 W / (3000 W + 1000 W) = ¾ = 0,75.

**Bezugszeichenliste**

| | |
|---|---|
| 1 | 1. Quadrant der Raumzeigerdarstellung |
| 2 | 2. Quadrant der Raumzeigerdarstellung |
| 3 | 3. Quadrant der Raumzeigerdarstellung |
| 4 | 4. Quadrant der Raumzeigerdarstellung |
| 10 | Werkzeugmaschine |

| | |
|---|---|
| 12 | Motor |
| 14 | Energieversorgungsvorrichtung |
| 16 | Werkzeug |
| 18 | Brems-Chopper |
| 20 | Spannungsregler der Energieversorgungsvorrichtung |
| 22 | Stromregler der Energieversorgungsvorrichtung |
| 24 | erster Regler |
| 26 | zweiter Regler |
| 28 | dritter Regler, insbesondere Tastverhältnis-Regler |
| 30 | Drehzahlregler |
| 32 | Tiefpassfilter |
| 34 | d-Strom-Regler |
| 36 | q-Strom-Regler |
| 38 | Mapping |
| 40 | erster Bereich |
| 42 | zweiter Bereich |
| 44 | Tastgradbereich |
| 46 | Bereich reduzierter Bremsleitung |
| M | Motorbetrieb |
| G | Generatorbetrieb |
| I_d | Drehmoment |
| I_q | Drehmoment |
| ↑M | positiv ansteigendes Drehmoment |
| ↓M | negativ ansteigendes Drehmoment |
| K | Kreisbereich als Stromlimit des Inverters |
| AB | Arbeitsbereich des Statorstromraumzeigers |
| N | 0 Nm-Kennlinie |
| MTPA | MTPA-Kennlinie (Maximum Torque per Ampere bzw. maximales Drehmoment pro Ampere |
| $\beta$_brems | Bremswinkel |
| PWM | Pulsweitenmodulation |
| n | Drehzahl |
| t | Zeit |

**Patentansprüche**

1. Verfahren zum Bremsen einer Werkzeugmaschine (10), wobei die Werkzeugmaschine (10) eine akkubetriebene oder eine netzbetriebene Werkzeugmaschine ist und einen Brems-Chopper aufweist, und elektrische Energie, die beim Bremsen der Werkzeugmaschine (10) frei wird, zumindest teilweise in eine Energieversorgungsvorrichtung (14) oder einen Zwischenkreis der Werkzeugmaschine (10) zurückgespeist wird,
   **gekennzeichnet durch die folgenden Verfahrensschritte:**

   a) Regeneratives Bremsen eines motorgetriebenen Antriebs der Werkzeugmaschine,
   b) Rückspeisen der elektrischen Energie, die beim Bremsen der Werkzeugmaschine (10) frei wird, in die Energieversorgungsvorrichtung (14) oder den Zwischenkreis der Werkzeugmaschine (10),
   c) Bestimmen, ob die elektrische Energie, die beim Bremsen der Werkzeugmaschine (10) frei wird, mindestens einen Grenzwert der Energieversorgungsvorrichtung (14) oder der Spannung des Zwischenkreises überschreitet;
   d) Aufnehmen eines Teils der elektrischen Energie durch den Brems-Chopper, wenn die beim Bremsen freiwerdende elektrische Energie den mindestens einen Grenzwert der Energieversorgungsvorrichtung (14) oder der Spannung des Zwischenkreises überschreitet.

2. Verfahren nach Anspruch 1,
   wobei ein Korrekturfaktor ($k_{Red}$) auf der Basis einer Differenz zwischen der während des Bremsens freiwerdenden elektrischen Energie und dem Grenzwert der Energieversorgungsvorrichtung (14) oder der Spannung des Zwischenkreises bestimmt wird, und wobei ein Tastgrad des Brems-Choppers auf Grundlage des Korrekturfaktors ($k_{Red}$) bestimmt wird.

3. Verfahren nach Anspruch 2,

wobei der Korrekturfaktor ($k_{Red}$) in einem Bereich von 0 bis 1 liegt.

**4.** Verfahren nach Anspruch 2 oder 3,
wobei sich der Korrekturfaktor ($k_{Red}$) aus einem ersten Korrekturparameter ($k_{U\_red}$), und einem zweiten Korrekturparameter ($k_{I\_red}$), insbesondere aus einem Produkt des ersten Korrekturparameters ($k_{U\_red}$), mit dem zweiten Korrekturparameter ($k_{I\_red}$), zusammensetzt, und wobei der erste Korrekturparameter ($k_{U\_red}$) vorzugsweise durch einen Spannungsregler der Energieversorgungsvorrichtung ermittelt wird, und wobei der zweite Korrekturparameter ($k_{I\_red}$) vorzugsweise durch einen Stromregler der Energieversorgungsvorrichtung ermittelt wird.

**5.** Verfahren nach einem der Ansprüche 2 bis 4,
wobei der Tastgrad D des Brems-Choppers auf Grundlage eines Verhältnisses des Korrekturfaktors ($k_{Red}$) gegenüber einer Mapping-Grenze ($k_{Mapping}$) bestimmt wird, wobei die Mapping-Grenze ($k_{Mapping}$) einem Grenzwert des Korrekturfaktors ($k_{Red}$) entspricht, ab welchem eine Reduzierung der Bremsleistung der Werkzeugmaschine vorgenommen wird.

**6.** Verfahren nach Anspruch 5,
wobei der Tastgrad D des Brems-Choppers den Wert 1 aufweist, wenn der Korrekturfaktor ($k_{Red}$) kleiner oder gleich der Mapping-Grenze ($k_{Mapping}$) ist.

**7.** Verfahren nach Anspruch 5 oder 6,
wobei der Tastgrad D des Brems-Choppers nach folgender Formel ermittelt wird, solange der Korrekturfaktor ($k_{Red}$) oberhalb der Mapping-Grenze ($k_{Mapping}$) liegt:

$$D = k_{red} / (k_{Mapping} - 1) - 1 / (k_{Mapping} - 1)$$

**8.** Verfahren nach Anspruch 5 bis 7,
wobei die Mapping-Grenze ($k_{Mapping}$) einen Wert zwischen 0 und 1 aufweist.

**9.** Verfahren nach einem der Ansprüche 5 bis 8,
wobei die Mapping-Grenze ($k_{Mapping}$) ein konstanter, vorbestimmter Wert ist.

**10.** Verfahren nach einem der Ansprüche 5 bis 8,
wobei die Mapping-Grenze ($k_{Mapping}$) dynamisch ermittelt wird, insbesondere auf Grundlage einer mechanischen Bremsleistung ($P_{Mech}$) der Werkzeugmaschine sowie einer Chopper-Bremsleistung ($P_{Chopper}$).

**11.** Verfahren nach Anspruch 10,
wobei die Mapping-Grenze nach folgender Formel ermittelt wird:

$$k_{mapping} = P_{mech} / (P_{mech} + P_{Chopper})$$

**12.** Verfahren nach einem der Ansprüche 5 bis 11,
wobei die Bremsleistung der Werkzeugmaschine (10) durch den folgenden Verfahrensschritt reduziert wird:

e) Drehung eines Stromraumzeigers $I_{S,\,max}$ in der Raumzeigerdarstellung durch Anwendung eines geänderten Bremswinkels $\beta_{brems,}$ so dass eine Länge des Stromraumzeigers $I_{S,\,max}$ im Wesentlichen unverändert bleibt, oder
f) Anwendung eines Strom-Korrekturfaktors $k_{S,red}$ auf einen maximalen Motorstrom $I_{S,\,max}$, wodurch ein reduzierter Sollwert $I_{S,\,red}$ für den Motorstrom erhalten wird.

**13.** Verfahren nach Anspruch 12,
wobei der Strom-Korrekturfaktor $k_{S,red}$ auf Grundlage eines Verhältnisses des Korrekturfaktors $k_{Red}$ gegenüber der Mapping-Grenze ($k_{Mapping}$) bestimmt wird.

**14.** Verfahren nach Anspruch 12 oder 13,
wobei der Strom-Korrekturfaktor $k_{S,red}$ nach folgender Formel ermittelt wird, solange der Korrekturfaktor $k_{Red}$ unterhalb der Mapping-Grenze ($k_{Mapping}$) liegt:

$$k_{S,red} = k_{red} / k_{Mapping}$$

15. Werkzeugmaschine (10) mit einem Brems-Chopper zur Durchführung des Verfahrens nach einem der vorhergehenden Ansprüche wobei ein Motor (12) der Werkzeugmaschine (10) ein bürstenloser Motor ist.

# Fig. 1

# Fig. 2a

# Fig. 2b

# Fig. 3

# Fig. 4

**Fig. 5**

# Fig. 6

PWM

34

36

$i_{d,ist}$

$i_{q,ist}$

Switching: drive or break

MTPA (drive)

$=> i\_d, soll; i\_q, soll$

$I_{s,max}$

$i_{d,soll}$

$i_{q,soll}$

$I_{s,soll}$

$i_{q,soll}$

30

$=> \beta_{brems}$

$\beta_{brems}$

$\beta_{brems,MTPA}$

$\beta_{brems,ONm}$

$k_{red}$

28

$D_{soll}$

$D_{Chopper,ist}$

PWM of 18

$D_{Chopper,ist}$

32

24

$U_{Chopper}$

$u_{Akku}$

$u_{Akku,max}$

22

$I_{Akku,max}$

$i_{Akku}$

Fig. 7

# Fig. 8

**Fig. 9**

**Fig. 10**

# Fig. 11

# Fig. 12

Mapping-Grenze
$k_{Mapping}$

$k_{red}$

$k_{S,red}$ bzw. $k_{\beta,red}$

$D$

Europäisches
Patentamt

European
Patent Office

Office européen
des brevets

# EUROPÄISCHER RECHERCHENBERICHT

Nummer der Anmeldung

EP 24 18 0425

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2017 108075 A1 (MAKITA CORP [JP]) 19. Oktober 2017 (2017-10-19) <br> * Absatz [0030]; Abbildung 2 * <br> * Absatz [0056] - Absatz [0057] * <br> ----- | 1-6,10, 15 | INV. <br> H02P3/18 <br> B25F5/00 <br> H02P21/36 |
| Y | US 2003/075819 A1 (MIZUNO HIROYUKI [JP]) 24. April 2003 (2003-04-24) <br> * Absatz [0043] - Absatz [0045] * <br> * Absatz [0057] - Absatz [0058]; Abbildung 5 * <br> * Absatz [0046] - Absatz [0047] * <br> ----- | 1-6,10, 15 | |

RECHERCHIERTE
SACHGEBIETE (IPC)

H02P
B25H
B25F

Der vorliegende Recherchenbericht wurde für alle Patentansprüche erstellt

| Recherchenort | Abschlußdatum der Recherche | Prüfer |
|---|---|---|
| München | 13. November 2024 | Schürle, Patrick |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
   Dokument

EPO FORM 1503 03.82 (P04C03)

# EP 4 661 280 A1

## ANHANG ZUM EUROPÄISCHEN RECHERCHENBERICHT
## ÜBER DIE EUROPÄISCHE PATENTANMELDUNG NR.

EP 24 18 0425

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2024

| Im Recherchenbericht angeführtes Patentdokument | Datum der Veröffentlichung | Mitglied(er) der Patentfamilie | | Datum der Veröffentlichung |
|---|---|---|---|---|
| DE 102017108075 A1 | 19-10-2017 | CN | 107303665 A | 31-10-2017 |
| | | DE | 102017108075 A1 | 19-10-2017 |
| | | JP | 6719952 B2 | 08-07-2020 |
| | | JP | 2017192993 A | 26-10-2017 |
| | | US | 2017302211 A1 | 19-10-2017 |
| US 2003075819 A1 | 24-04-2003 | AT | E504415 T1 | 15-04-2011 |
| | | CN | 1413823 A | 30-04-2003 |
| | | EP | 1304209 A1 | 23-04-2003 |
| | | SG | 98075 A1 | 20-08-2003 |
| | | TW | I221806 B | 11-10-2004 |
| | | US | 2003075819 A1 | 24-04-2003 |

EPO FORM P0461

Für nähere Einzelheiten zu diesem Anhang : siehe Amtsblatt des Europäischen Patentamts, Nr.12/82